(19) Europäisches Patentamt / European Patent Office / Office européen des brevets

(11) **EP 4 386 606 A1**

(12) **EUROPEAN PATENT APPLICATION**
published in accordance with Art. 153(4) EPC

(43) Date of publication:
**19.06.2024 Bulletin 2024/25**

(51) International Patent Classification (IPC):
***G06F 21/62*** (2013.01)

(21) Application number: **22871978.7**

(52) Cooperative Patent Classification (CPC):
**G06F 3/14; G06F 21/62; G06F 21/84**

(22) Date of filing: **20.09.2022**

(86) International application number:
**PCT/CN2022/119976**

(87) International publication number:
**WO 2023/045932 (30.03.2023 Gazette 2023/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.09.2021 CN 202111110626**

(71) Applicant: **Huawei Technologies Co., Ltd.
Shenzhen, Guangdong 518129 (CN)**

(72) Inventor: **ZHANG, Yuxi
Shenzhen, Guangdong 518129 (CN)**

(74) Representative: **Gill Jennings & Every LLP
The Broadgate Tower
20 Primrose Street
London EC2A 2ES (GB)**

(54) **DEVICE CONTROL METHOD AND RELATED APPARATUS**

(57)     A device control method and a related apparatus are disclosed. The method is applied to an electronic device. The electronic device includes a first screen and a second screen. The first screen and the second screen form a foldable screen of the electronic device, and the first screen and the second screen are respectively located on two sides of a folding edge of the foldable screen; or the first screen and the second screen form a double-sided screen of the electronic device, the first screen is located on a front surface of the electronic device, and the second screen is located on a back surface of the electronic device. The method includes: receiving a first operation (S 10 1) when it is detected that the electronic device is in a first preset posture, where the first preset posture is determined based on a posture of the first screen and/or a posture of the second screen; disabling M preset privacy information obtaining modules in response to the detected first preset posture and the first operation (S102); detecting a second operation (S103); and recovering the M privacy information obtaining modules in response to the second operation (S104). In this way, the privacy information obtaining module can be quickly disabled or recovered based on a posture feature of the electronic device, thereby effectively avoiding privacy information leakage.

S101: An electronic device 100 receives a first operation of a user when detecting that the electronic device 100 is in a first preset posture

S102: Disable M preset privacy information obtaining modules in response to the detected first preset posture and the first operation, where M is a positive integer

S103: Receive a second operation of the user

S104: Recover normal use of the M privacy information obtaining modules in response to the detected second operation

FIG. 10

## Description

This application claims priority to Chinese Patent Application No. 202111110626.4, filed with the China National Intellectual Property Administration on September 22, 2021 and entitled "DEVICE CONTROL METHOD AND RELATED APPARATUS", which is incorporated herein by reference in its entirety.

## TECHNICAL FIELD

This application relates to the field of electronic technologies, and in particular, to a device control method and a related apparatus.

## BACKGROUND

Some third-party applications illegally steal privacy information of a user by using functions such as recording by using a microphone, shooting by using a camera, and geographical position obtaining by using a positioning module. In a scenario (for example, an important conference) in which confidentiality is required, privacy information leakage may cause a great loss to the user. Currently, a solution of each manufacturer is to remind the user by displaying prompt information when detecting that the third-party application steals the user information on the background by using functional modules such as the microphone, the camera, and the positioning module. However, the foregoing solution cannot effectively avoid the privacy information leakage.

## SUMMARY

This application provides a device control method and a related apparatus. A privacy information obtaining module is quickly disabled or recovered based on a posture feature of an electronic device, thereby effectively avoiding privacy information leakage and improving user experience.

According to a first aspect, this application provides a device control method, applied to an electronic device. The electronic device includes a first screen and a second screen; the first screen and the second screen form a foldable screen of the electronic device, and the first screen and the second screen are respectively located on two sides of a folding edge of the foldable screen; or the first screen and the second screen form a double-sided screen of the electronic device, the first screen is disposed on a front surface of the electronic device, and the second screen is disposed on a back surface of the electronic device. The method includes: receiving, by the electronic device, a first operation when detecting that the electronic device is in a first preset posture, where the first preset posture is determined based on a posture of the first screen and/or a posture of the second screen; disabling M preset privacy information obtaining modules in response to the detected first preset posture and the first operation, where M is a positive integer; detecting a second operation; and recovering normal use of the M privacy information obtaining modules in response to the second operation.

In this embodiment of this application, when entering a scenario in which confidentiality is required, a user can quickly and naturally disable the privacy information obtaining module based on a physical gesture feature of the electronic device and simple user interaction, to prevent privacy information from being stolen. Then, the privacy information obtaining module can be enabled again quickly and naturally through simple user interaction. In this way, control efficiency of the privacy information obtaining module and use experience are effectively improved.

In an implementation, the first preset posture is determined by the electronic device based on at least one of a first included angle between the first screen and the second screen, an included angle between the first screen and a horizontal plane, an included angle between the second screen and the horizontal plane, an included angle between an orientation of the first screen and a Z axis of a geographic coordinate system, and an included angle between an orientation of the second screen and the Z axis of the geographic coordinate system.

In an implementation, the disabling M preset privacy information obtaining modules in response to the detected first preset posture and the first operation includes: in response to the detected first preset posture and the first operation, enabling a privacy mode of the electronic device, and disabling the M privacy information obtaining modules indicated by the privacy mode of the electronic device.

In this embodiment of this application, the privacy mode can be enabled quickly and naturally based on a physical posture feature of the electronic device and simple user interaction, thereby avoiding a complex user operation and effectively improving user experience.

In an implementation, the method further includes: The electronic device sends a disabling message to an associated device of the electronic device in response to the detected first preset posture and the first operation, where the disabling message is used to prompt the associated device to disable N preset privacy information obtaining modules, and N is a positive integer.

In this embodiment of this application, by controlling a physical posture feature of the electronic device and simple user interaction, a user can simultaneously control the electronic device and all privacy information obtaining modules of the associated device of the device.

In an implementation, the disabling message is used to prompt the associated device to enable a privacy mode, and disable the N privacy information obtaining modules indicated by the privacy mode of the associated device.

In an implementation, the detecting a second operation includes: The electronic device receives the second operation when detecting that the electronic device is in a third preset posture; and the recovering normal use of the M privacy information obtaining modules in response to the second operation includes: recovering the normal use of the M privacy information obtaining modules in response to the detected second preset posture and the second operation.

In this embodiment of this application, by controlling a physical posture feature of the electronic device and simple user interaction, a user can quickly recover the disabled privacy information obtaining module.

In an implementation, the first operation includes at least one of the following operations: an operation of switching the electronic device from the first preset posture to a fourth preset posture, where the first preset posture is different from the fourth preset posture; an operation of switching the electronic device from the first preset posture to the fourth preset posture, and then switching back to the first preset posture; an input operation performed on one or more preset function buttons; an operation of performing a preset gesture, where a first camera of the electronic device is configured to detect, when the electronic device is in the first preset posture, whether the preset gesture is received, and the first camera is visible to a user in the first preset posture; and an input operation performed on a virtual control displayed on a first preset display, where the first preset display is visible to the user in the first preset posture.

In an implementation, before that the electronic device receives a first operation, the method further includes: The electronic device displays a first operation prompt on a first preset display when detecting that the electronic device is in the first preset posture; or the electronic device displays the first operation prompt on the first preset display when the electronic device detects that the electronic device is in the first preset posture and a first included angle does not change within first preset duration, where the first operation prompt is used to prompt that the first operation is used to disable the M privacy information obtaining modules, and the first preset display is visible to a user in the first preset posture.

In this embodiment of this application, when it is detected that the electronic device is in the preset posture, the operation prompt can be displayed, to guide a user to disable the privacy information module by using the first operation. The user does not need to remember the first operation, thereby effectively improving user experience.

In an implementation, before that the electronic device receives a first operation, the method further includes: The electronic device displays a first control on a first preset display when detecting that the electronic device is in the first preset posture, where the first preset display is visible to a user in the first preset posture; and that the electronic device receives a first operation when detecting that the electronic device is in a first preset posture includes: receiving the first operation performed on the first control.

In this embodiment of this application, after the electronic device displays the first control, a user can trigger, by using the first control in the first preset posture of the electronic device, the electronic device to disable the M preset privacy information obtaining modules.

In an implementation, before that the electronic device receives a first operation, the method further includes: The electronic device displays a first control on a first preset display when detecting that the electronic device is in the first preset posture, where the first preset display is visible to a user in the first preset posture; and that the electronic device receives a first operation when detecting that the electronic device is in a first preset posture includes: when the electronic device is in the first preset posture, receiving a third operation of switching the electronic device from the first preset posture to another posture; and receiving a fourth operation performed on the first control, where the first operation includes the third operation and the fourth operation.

In this embodiment of this application, after the electronic device displays the first control, a user can trigger, in any posture of the electronic device by using the first control, the electronic device to disable the M preset privacy information obtaining modules.

In an implementation, before that the electronic device receives a first operation, the method further includes: The electronic device displays a time setting control when detecting that the electronic device is in the first preset posture; or the electronic device displays the time setting control when the electronic device detects that the electronic device is in the first preset posture and a first included angle does not change within first preset duration; and the time setting control receives first disabling duration set by a user; and the disabling M preset privacy information obtaining modules in response to the detected first preset posture and the first operation includes: in response to the detected first preset posture and the first operation, disabling the M privacy information obtaining modules, and setting disabling duration of the M privacy information obtaining modules to the first disabling duration, where the first disabling duration indicates the electronic device to recover the normal use of the M privacy information obtaining modules if the second operation is not received within the first disabling duration within which the M privacy information obtaining modules are disabled.

In this embodiment of this application, the user can set the disabling duration. In this way, different requirements of different people or different places on the disabling duration can be met.

In an implementation, before that the electronic device receives a first operation, the method further includes: When detecting that the electronic device is in the first preset posture, the electronic device displays selection controls respectively corresponding to a plurality of privacy information obtaining modules, where the plurality of privacy information obtaining modules include a first privacy information obtaining module and a second privacy information obtaining module, the first privacy information obtaining module corresponds to a first selection control, and the second privacy information obtaining module corresponds to a second selection control; and if the electronic device receives a selection operation performed on the first selection control, but the electronic device does not receive a selection operation performed on the second selection control, the M privacy information obtaining modules include the first privacy information obtaining module, and do not include the second privacy information obtaining module.

In this embodiment of this application, a user can set the privacy information obtaining modules to be disabled. In this way, different requirements of different people or different places on the privacy information obtaining module can be met.

In an implementation, the method further includes: The electronic device receives a fifth operation when detecting that the electronic device is in a second preset posture; and disabling K preset privacy information obtaining modules in response to the detected second preset posture and the fifth operation, where K is a positive integer, the M privacy information obtaining modules and the K privacy information obtaining modules are completely different or not exactly the same, and the first preset posture and the second preset posture are different postures.

In this embodiment of this application, a user can disable different privacy information obtaining modules by using different preset postures. In this way, different disabling requirements of the user can be met.

In an implementation, the method further includes: The electronic device receives a sixth operation when detecting that the electronic device is in the first preset posture; and disabling K preset privacy information obtaining modules in response to the detected first preset posture and the sixth operation, where K is a positive integer, the M privacy information obtaining modules and the K privacy information obtaining modules are completely different or not exactly the same, and the first operation and the fifth operation are different operations.

In this embodiment of this application, a user can disable different privacy information obtaining modules by using different input operations. In this way, different disabling requirements of the user can be met.

In an implementation, before that the electronic device receives a first operation, the method further includes: The electronic device displays a second operation prompt on the first preset display when detecting that the electronic device is in the first preset posture; or the electronic device displays the second operation prompt on the first preset display when the electronic device detects that the electronic device is in the first preset posture and the first included angle does not change within the first preset duration, where the second operation prompt is used to prompt that the first operation is used to disable the M privacy information obtaining modules, the fifth operation is used to disable the K privacy information obtaining modules, and the first preset display is visible to the user in the first preset posture.

In an implementation, the privacy information obtaining module of the electronic device includes one or more of the following: a camera, a microphone, a positioning module, a Wi-Fi module, a Bluetooth module, and a mobile data network module.

According to a second aspect, this application provides an electronic device. The electronic device includes a first screen and a second screen; the first screen and the second screen form a foldable screen of the electronic device, and the first screen and the second screen are respectively located on two sides of a folding edge of the foldable screen; or the first screen and the second screen form a double-sided screen of the electronic device, the first screen is disposed on a front surface of the electronic device, and the second screen is disposed on a back surface of the electronic device. The electronic device includes:

> a detection unit, configured to receive a first operation when detecting that the electronic device is in a first preset posture, where the first preset posture is determined based on a posture of the first screen and/or a posture of the second screen; and
> a response unit, configured to disable M preset privacy information obtaining modules in response to the detected first preset posture and the first operation, where M is a positive integer.

The detection unit is further configured to detect a second operation; and
the response unit is further configured to recover normal use of the M privacy information obtaining modules in response to the second operation.

In an implementation, the first preset posture is determined based on at least one of a first included angle between the first screen and the second screen, an included angle between the first screen and a horizontal plane, an included angle between the second screen and the horizontal plane, an included angle between an orientation of the first screen and a Z axis of a geographic coordinate system, and an included angle between an orientation of the second screen and the Z axis of the geographic coordinate system.

In an implementation, the response unit is specifically configured to: in response to the detected first preset posture and the first operation, enable a privacy mode of the electronic device, and disable the M privacy information obtaining modules indicated by the privacy mode of the electronic device.

In an implementation, the response unit is further configured to send a disabling message to an associated device of the electronic device in response to the detected first preset posture and the first operation, where the disabling message is used to prompt the associated device to disable N preset privacy information obtaining modules, and N is a positive integer.

In an implementation, the disabling message is used to prompt the associated device to enable a privacy mode, and disable the N privacy information obtaining modules indicated by the privacy mode of the associated device.

In an implementation, the detection unit is specifically configured to receive the second operation when detecting that the electronic device is in a third preset posture; and the response unit is specifically configured to recover the normal use of the M privacy information obtaining modules in response to the detected second preset posture and the second operation.

In an implementation, the first operation includes at least one of the following operations: an operation of switching the electronic device from the first preset posture to a fourth preset posture, where the first preset posture is different from the fourth preset posture; an operation of switching the electronic device from the first preset posture to the fourth preset posture, and then switching back to the first preset posture; an input operation performed on one or more preset function buttons; an operation of performing a preset gesture, where a first camera of the electronic device is configured to detect, when the electronic device is in the first preset posture, whether the preset gesture is received, and the first camera is visible to a user in the first preset posture; and an input operation performed on a virtual control displayed on a first preset display, where the first preset display is visible to the user in the first preset posture.

In an implementation, the electronic device further includes a display unit. Before the first operation is received, the display unit is configured to display a first operation prompt on a first preset display when it is detected that the electronic device is in the first preset posture; or display the first operation prompt on the first preset display when it is detected that the electronic device is in the first preset posture and a first included angle does not change within first preset duration, where the first operation prompt is used to prompt that the first operation is used to disable the M privacy information obtaining modules, and the first preset display is visible to a user in the first preset posture.

In an implementation, before the first operation is received, the display unit is further configured to display a first control on a first preset display when it is detected that the electronic device is in the first preset posture, where the first preset display is visible to a user in the first preset posture; and the detection unit is specifically configured to receive the first operation performed on the first control.

In an implementation, before the first operation is received, the display unit is further configured to display a first control on a first preset display when it is detected that the electronic device is in the first preset posture, where the first preset display is visible to a user in the first preset posture; and the detection unit is specifically configured to: when the electronic device is in the first preset posture, receive a third operation of switching the electronic device from the first preset posture to another posture; and receive a fourth operation performed on the first control, where the first operation includes the third operation and the fourth operation.

In an implementation, before the first operation is received, the display unit is further configured to display a time setting control when it is detected that the electronic device in the first preset posture; or display the time setting control when it is detected that the electronic device is in the first preset posture and a first included angle does not change within first preset duration; and the time setting control receives first disabling duration set by a user; and the response unit is specifically configured to: in response to the detected first preset posture and the first operation, disable the M privacy information obtaining modules, and set disabling duration of the M privacy information obtaining modules to the first disabling duration, where the first disabling duration indicates that the normal use of the M privacy information obtaining modules is to be recovered if the second operation is not received within the first disabling duration within which the M privacy information obtaining modules are disabled.

In an implementation, before the first operation is received, the display unit is further configured to: when it is detected that the electronic device is in the first preset posture, display selection controls respectively corresponding to a plurality of privacy information obtaining modules, where the plurality of privacy information obtaining modules include a first privacy information obtaining module and a second privacy information obtaining module, the first privacy information obtaining module corresponds to a first selection control, and the second privacy information obtaining module corresponds to a second selection control; and if a selection operation performed on the first selection control is received, and a selection operation performed on the second selection control is not received, the M privacy information obtaining modules include the first privacy information obtaining module, and do not include the second privacy information obtaining module.

In an implementation, the detection unit is further configured to receive a fifth operation when detecting that the electronic device is in a second preset posture; and the response unit is further configured to disable K preset privacy information obtaining modules in response to the detected second preset posture and the fifth operation, where K is a positive integer, the M privacy information obtaining modules and the K privacy information obtaining modules are completely different or not exactly the same, and the first preset posture and the second preset posture are different postures.

In an implementation, the detection unit is further configured to receive a sixth operation when detecting that the electronic device is in the first preset posture; and the response unit is further configured to disable K preset privacy information obtaining modules in response to the detected first preset posture and the sixth operation, where K is a positive integer, the M privacy information obtaining modules and the K privacy information obtaining modules are completely different or not exactly the same, and the first operation and the fifth operation are different operations.

In an implementation, before the first operation is received, the display unit is further configured to display a second operation prompt on the first preset display when it is detected that the electronic device is in the first preset posture; or display the second operation prompt on the first preset display when it is detected that the electronic device is in the first preset posture and the first included angle does not change within the first preset duration, where the second operation prompt is used to prompt that the first operation is used to disable the M privacy information obtaining modules, the fifth operation is used to disable the K privacy information obtaining modules, and the first preset display is visible to the user in the first preset posture.

In an implementation, the privacy information obtaining module of the electronic device includes one or more of the following: a camera, a microphone, a positioning module, a Wi-Fi module, a Bluetooth module, and a mobile data network module.

According to a third aspect, this application provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the device control method according to any one of the possible implementations of any one of the foregoing aspects.

According to a fourth aspect, an embodiment of this application provides a computer storage medium, including computer instructions. When the computer instructions are run on an electronic device, the electronic device is enabled to perform the device control method according to any one of the possible implementations of any one of the foregoing aspects.

According to a fifth aspect, an embodiment of this application provides a computer program product. When the computer program product runs on a computer, the computer is enabled to perform the device control method according to any one of the possible implementations of any one of the foregoing aspects.

**BRIEF DESCRIPTION OF DRAWINGS**

FIG. 1A to FIG 1F each are a schematic diagram of a product form of a vertically foldable electronic device according to an embodiment of this application;
FIG. 2A to FIG. 2F each are a schematic diagram of a product form of a horizontally foldable electronic device according to an embodiment of this application;
FIG. 3A to FIG. 3C each are a schematic diagram of an outer screen of a vertically foldable electronic device according to an embodiment of this application;
FIG. 4A to FIG 4C each are a schematic diagram of an outer screen of a horizontally foldable electronic device according to an embodiment of this application;
FIG. 5 is a schematic diagram of a structure of an electronic device according to an embodiment of this application;
FIG. 6A is a schematic diagram of a geographic coordinate system according to an embodiment of this application;
FIG. 6B is a schematic diagram of calculating an included angle between a screen A and a screen B according to an embodiment of this application;
FIG. 7A is a schematic diagram of calculating an included angle between a screen A and a horizontal plane according to an embodiment of this application;
FIG. 7B is a schematic diagram of calculating an included angle between a screen B and a horizontal plane according to an embodiment of this application;
FIG. 8A to FIG. 8F are schematic diagrams of six support states of an electronic device according to an embodiment of this application;
FIG. 9A to FIG. 9E are user interfaces for setting a privacy mode according to an embodiment of this application;
FIG. 10 is a schematic flowchart of a device control method according to an embodiment of this application;
FIG. 11A to FIG. 11D each are a schematic diagram of an operation prompt according to an embodiment of this application;
FIG. 12A to FIG. 12C are schematic diagrams of setting disabling duration according to an embodiment of this application;
FIG. 13A to FIG. 13C are schematic diagrams of selecting and disabling a module according to an embodiment of this application;
FIG. 14A to FIG. 14C each are a schematic diagram of an operation prompt according to an embodiment of this application;
FIG. 15A and FIG. 15B each are a schematic diagram of an operation prompt according to an embodiment of this application;
FIG. 16A and FIG. 16B are a schematic diagram of a software architecture of an electronic device according to an embodiment of this application; and
FIG. 17 is a schematic diagram of a structure of another electronic device according to an embodiment of this application.

## DESCRIPTION OF EMBODIMENTS

The following clearly describes technical solutions in embodiments of this application in detail with reference to accompanying drawings. In descriptions of embodiments of this application, unless otherwise specified, "/" means "or". For example, A/B may indicate A or B. A term "and/or" in this specification is merely an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

Terms "first" and "second" below are merely intended for description, and shall not be understood as an implication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language such as Java or an extensible markup language (extensible markup language, XML). Interface source code is parsed and rendered on an electronic device, and is finally presented as content that can be identified by the user. The user interface is usually represented in a form of a graphical user interface (graphical user interface, GUI), and is a user interface that is related to a computer operation and that is displayed in a graphical manner. The user interface may be a visual interface element such as text, an icon, a button, a menu, a tab, a text box, a dialog box, a status bar, a navigation bar, or a widget that is displayed on a display of the electronic device.

An embodiment of this application provides a device control method. The method may be applied to an electronic device 100 in which a vertically foldable screen or a horizontally foldable screen is disposed, or may be applied to an electronic device 100 in which a double-sided screen is disposed. The foldable screen disposed in the electronic device 100 may be folded along a folding edge to form at least two screens, for example, a screen A and a screen B. The foldable screen can present a variety of forms based on a degree of folding. In some embodiments, the foldable screen of the electronic device 100 may present one or more of an expanded form, a forward half-folded form, a forward folded form, a reverse half-folded form, and a reverse folded form. The double-sided screen disposed in the electronic device 100 may be respectively located on a front surface and a back surface of the electronic device 100. For example, the double-sided screen includes a screen A and a screen B. The screen A is located on the front surface of the electronic device 100, the screen B is located on the back surface of the electronic device 100, and display directions of the screen A and the screen B are back to back. An included angle between the screen A and the screen B can be considered as 360°.

The following describes various forms of the electronic device 100 in which the vertically foldable screen is disposed.

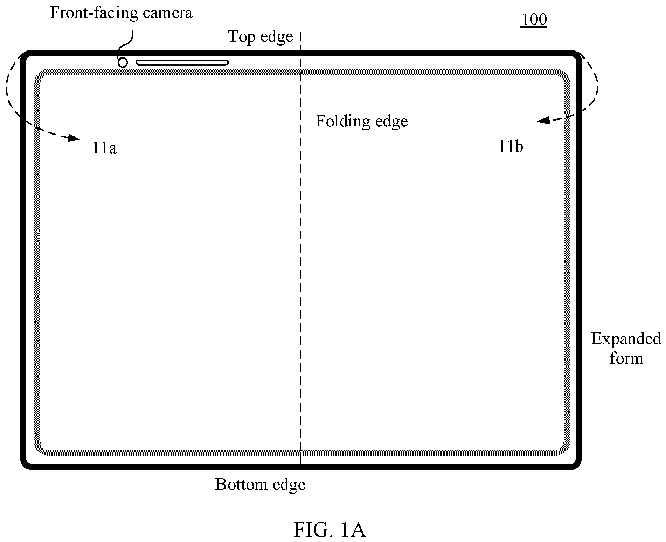

For example, FIG. 1A to FIG. 1F each are a schematic diagram of a product form of an electronic device 100 with a vertically foldable screen according to an embodiment of this application. A folding edge of the vertically foldable screen is perpendicular to a top edge line of the electronic device 100 (for ease of description, the top edge line is briefly referred to as the top edge) and a bottom edge line (for ease of description, the bottom edge line is briefly referred to as the bottom edge).

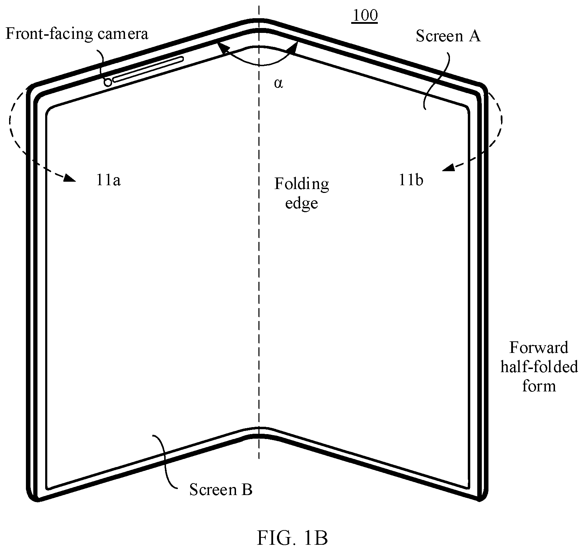

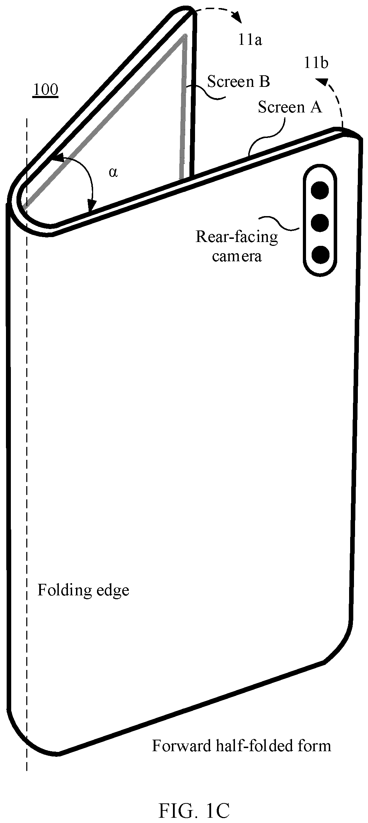

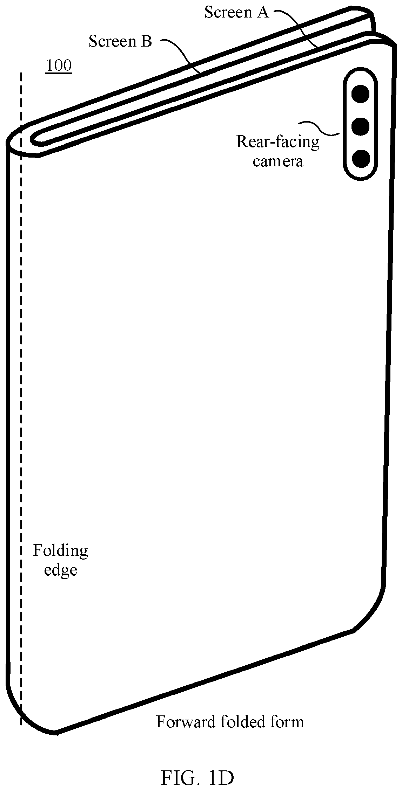

FIG. 1A is a schematic diagram of an expanded form of the vertically foldable screen. The vertically foldable screen shown in FIG. 1A can be folded inward along the folding edge in a direction 11a and/or a direction 11b shown in FIG. 1A, to form a screen A (namely, a first screen) and a screen B (namely, a second screen) in a forward half-folded form shown in FIG. 1B and FIG. 1C. After the vertically foldable screen is folded and divided into the screen A and the screen B, the screen A and a front-facing camera on the electronic device 100 may be on a same side of the folding edge. The vertically foldable screen shown in FIG. 1C can be further folded inward along the folding edge in the directions 11a and 11b shown in FIG. 1C, to form the vertically foldable screen in a forward folded form shown in FIG. 1D. As shown in FIG. 1D, after the vertically foldable screen of the electronic device 100 is completely folded forward, the screen A and the screen B are opposite and invisible to a user.

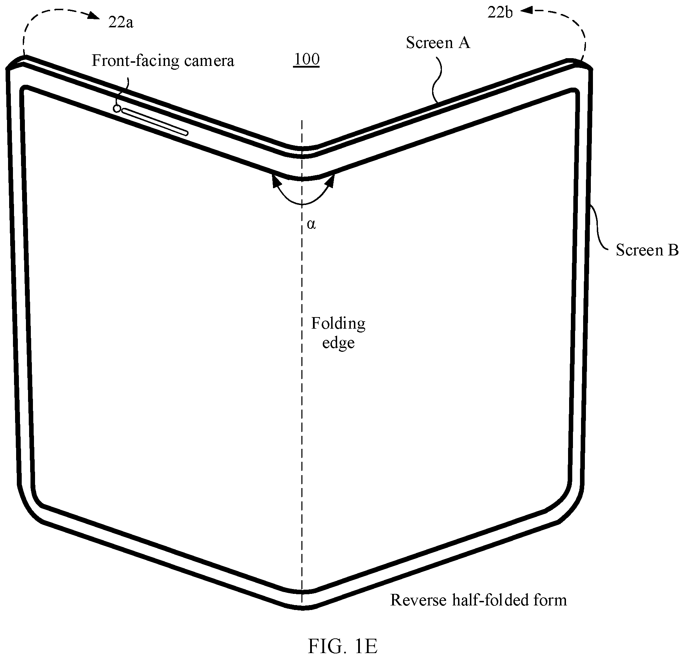

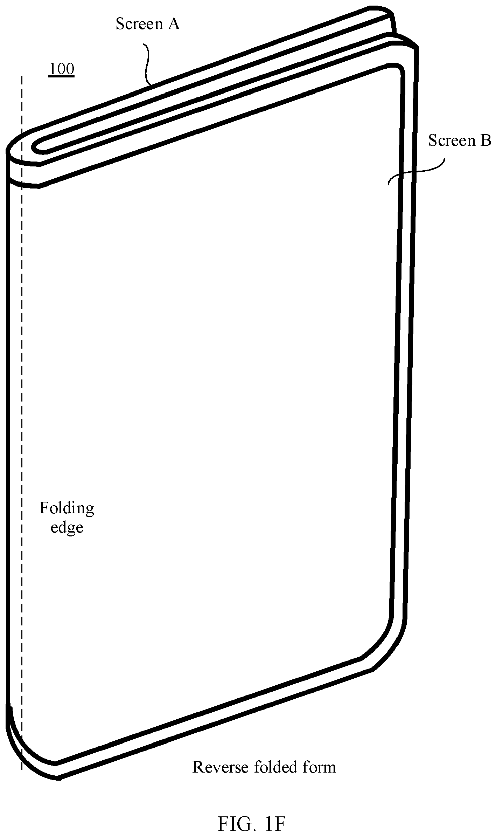

In some embodiments, the vertically foldable screen shown in FIG. 1A can be further folded outward along the folding edge, to form the screen A and the screen B in a reverse half-folded form shown in FIG. 1E. The vertically foldable screen shown in FIG. 1E can be further folded outward along the folding edge in directions 22a and 22b shown in FIG. 1E, to form the vertically foldable screen in a reverse folded form shown in FIG. 1F. As shown in FIG. 1F, after the vertically foldable screen of the electronic device 100 is completely folded reversely, the screen A and the screen B are back to back, and a back surface (namely, a back surface of the screen A and a back surface of the screen B) of the electronic device 100 is invisible to the user.

**The following describes various forms of the electronic device 100 in which the horizontally foldable screen is disposed.**

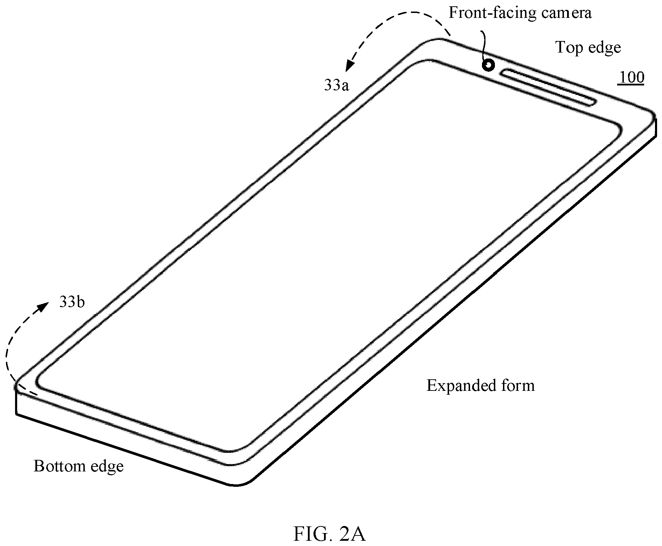

For example, FIG. 2A to FIG. 2F each are a schematic diagram of a product form of an electronic device 100 with a horizontally foldable screen according to an embodiment of this application. A folding edge of the horizontally foldable screen is parallel to a top edge and a bottom edge of the electronic device 100.

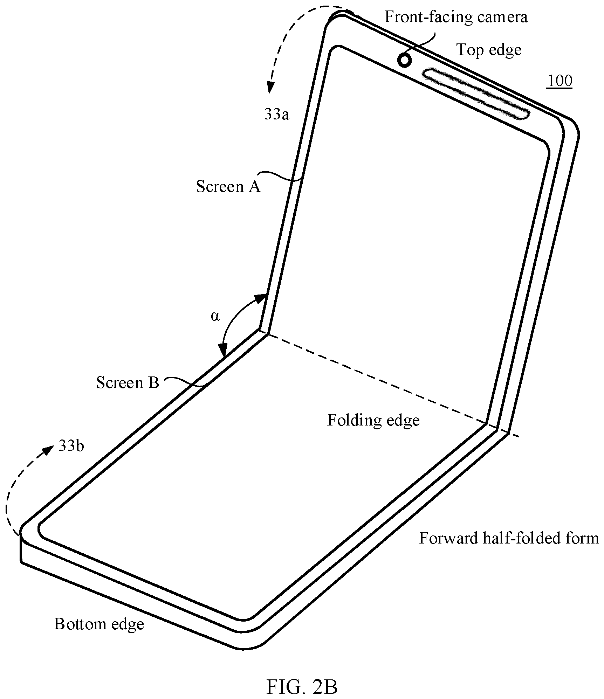

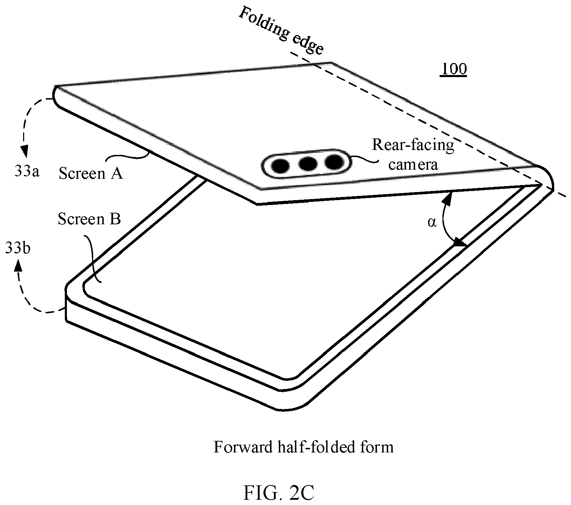

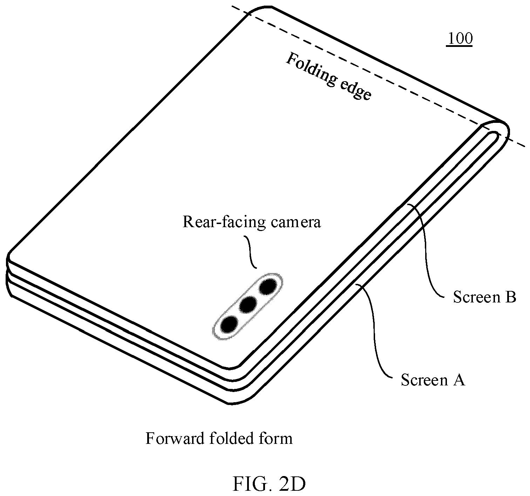

FIG. 2A is a schematic diagram of an expanded form of the horizontally foldable screen. The horizontally foldable screen shown in FIG. 2A can be folded inward along the folding edge in a direction 33a and/or a direction 33b shown in FIG. 2A, to form a screen A and a screen B in a forward half-folded form shown in FIG. 2B and FIG. 2C. After the horizontally foldable screen is folded and divided into the screen A and the screen B, the screen A and a front-facing camera on the electronic device 100 may be on a same side of the folding edge. The horizontally foldable screen shown in FIG. 2C can be further folded inward along the folding edge in the directions 33a and 33b shown in FIG. 2C, to form the horizontally foldable screen in a forward folded form shown in FIG. 2D. As shown in FIG. 2D, after the horizontally foldable screen of the electronic device 100 is completely folded forward, the screen A and the screen B are opposite and invisible to a user.

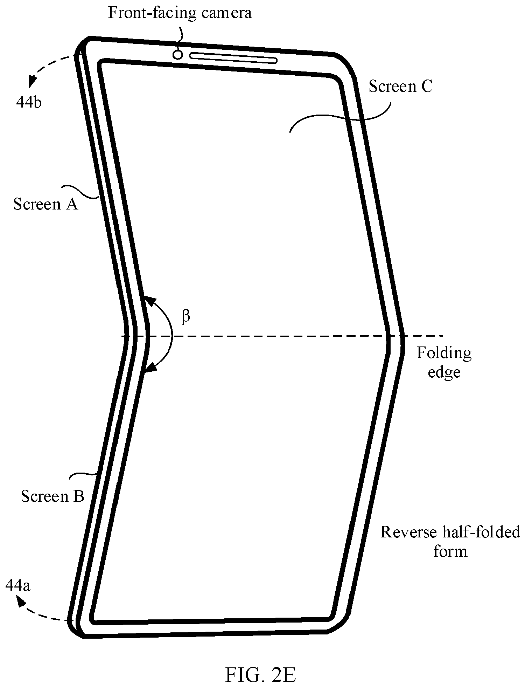

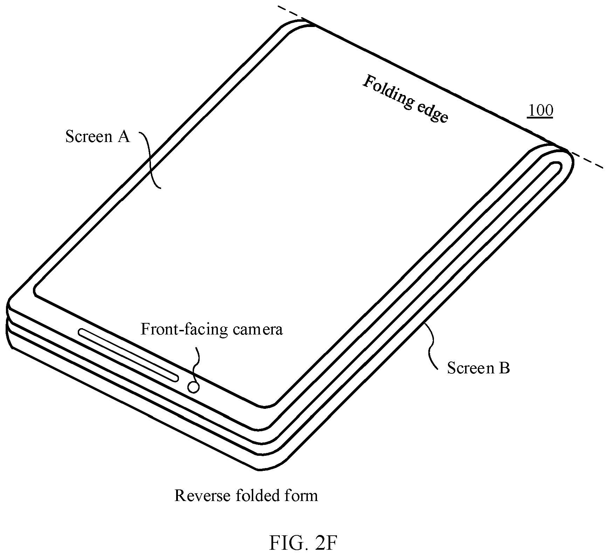

In some embodiments, the horizontally foldable screen shown in FIG. 2A can be further folded outward along the folding edge, to form the screen A and the screen B in a reverse half-folded form shown in FIG. 2E. The horizontally foldable screen shown in FIG. 2E can be further folded outward along the folding edge in directions 44a and 44b shown in FIG. 2E, to form the horizontally foldable screen in a reverse folded form shown in FIG. 2F. As shown in FIG. 2F, after the horizontally foldable screen of the electronic device 100 is completely folded reversely, the screen A and the screen B are back to back, and a back surface (namely, a back surface of the screen A and a back surface of the screen B) of the electronic device 100 is invisible to the user.

A display (a screen C) may be further disposed on the back surface of the screen A and/or the back surface of the screen B of the foldable screen (the vertically foldable screen or the horizontally foldable screen) provided in embodiments of this application.

The foldable screen including the screen A and the screen B is an inner screen of the electronic device 100, and the screen A, the screen B, and the front-facing camera are located on a front surface of the electronic device 100. The screen C is an outer screen of the electronic device 100, and the screen C is located on the back surface of the electronic device 100. In some embodiments, a rear-facing camera is located on the back surface of the electronic device 100. When the foldable screen of the electronic device 100 is folded into the screen A and the screen B along the folding edge, the screen C and the rear-facing camera are located on a same side of the folding edge. In some embodiments, the foldable screen of the electronic device 100 is the vertically foldable screen, and the rear-facing camera is located on the front surface of the electronic device 100. When the foldable screen of the electronic device 100 is folded into the screen A and the screen B along the folding edge, the screen B and the rear-facing camera are located on a same side of the folding edge.

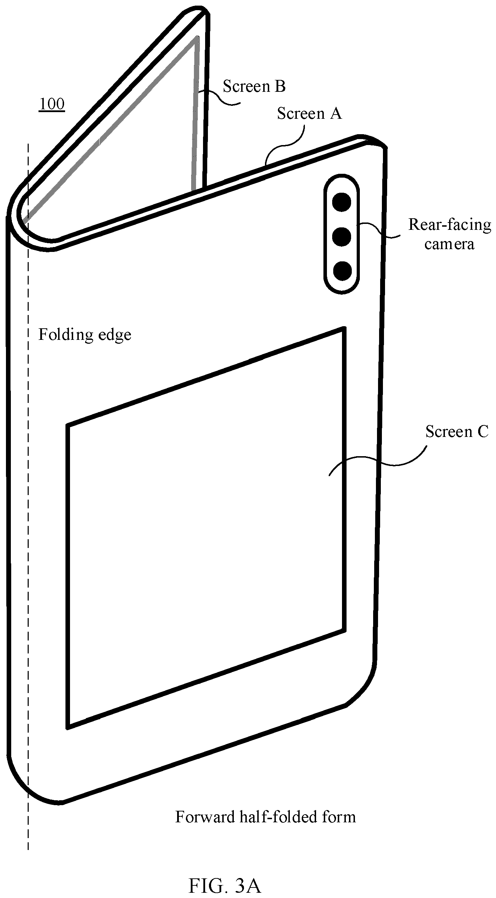

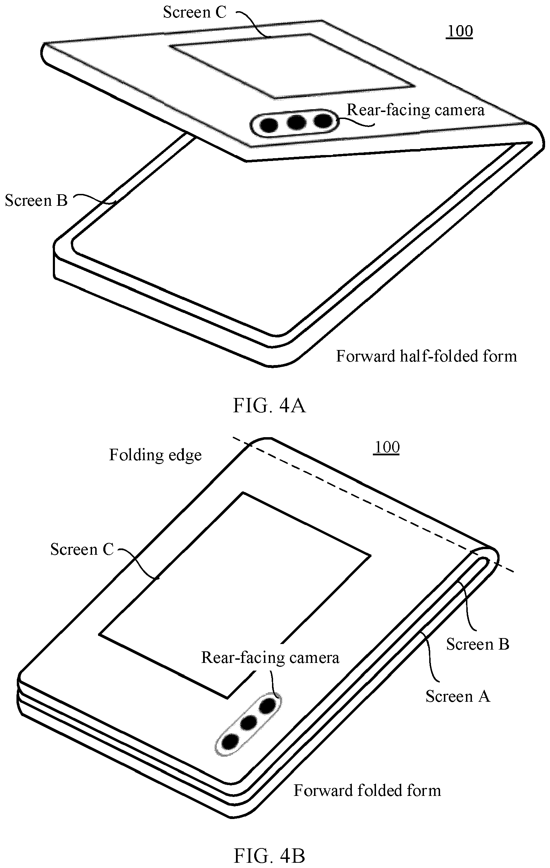

For example, FIG. 3A to FIG. 3C each are a schematic diagram of an outer screen of an electronic device 100 whose inner screen is disposed as a vertically foldable screen. FIG. 4A to FIG 4C each are a schematic diagram of an outer screen of an electronic device 100 whose inner screen is disposed as a horizontally foldable screen.

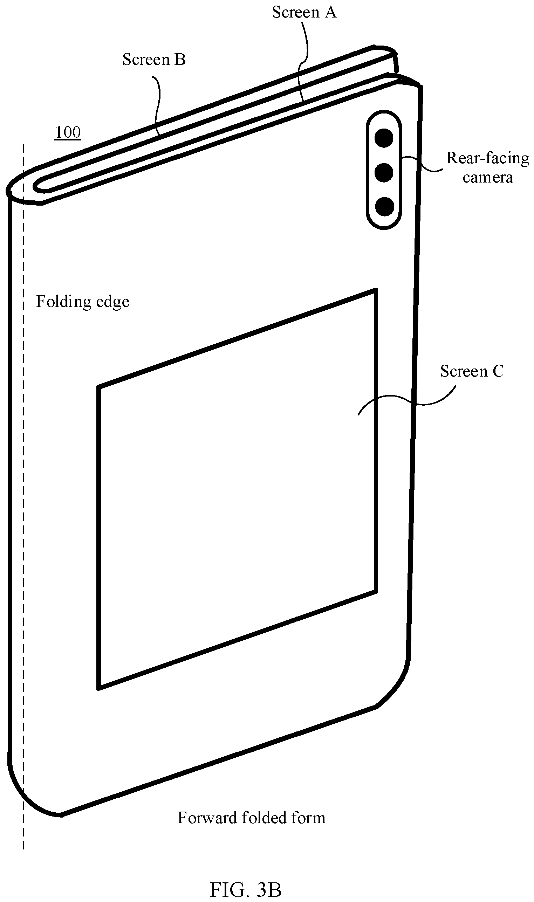

For example, as shown in FIG. 3A and FIG. 3B, a screen C may be disposed on a back surface of a screen A in the vertically foldable screen of the electronic device 100. As shown in FIG. 4A and FIG. 4B, a screen C may be disposed on a back surface of a screen A in the horizontal foldable screen of the electronic device 100. As shown in FIG. 3B and FIG. 4B, after the foldable screen corresponding to the inner screen is completely folded forward, the screen A and a screen B are invisible to a user. The screen C is located on the back surface of the screen A, and the screen C is visible to the user. The screen C and a rear-facing camera of the electronic device 100 may be on a same side of a folding edge.

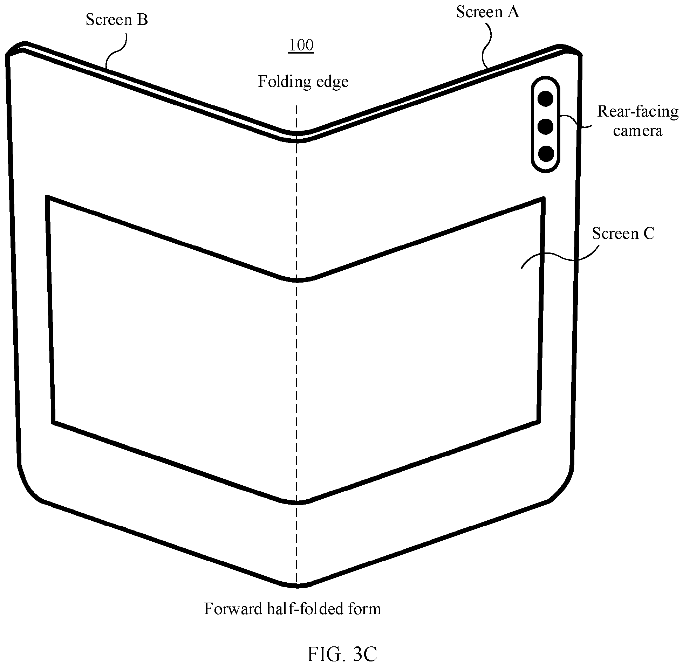

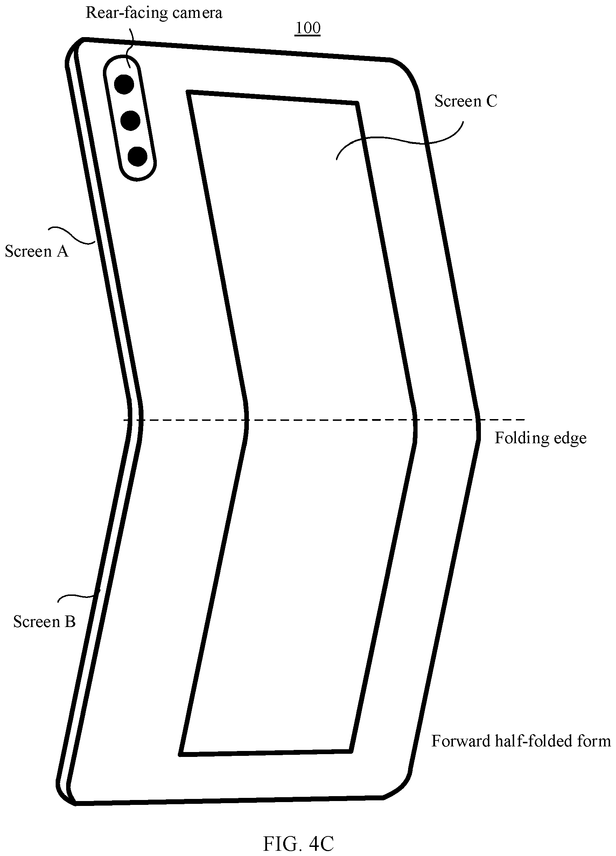

For example, as shown in FIG. 3C, a screen C that can be vertically folded may be disposed on the back surface of the screen A and a back surface of the screen B of the inner screen. For example, as shown in FIG. 4C, a screen C that can be horizontally folded may be disposed on the back surface of the screen A and a back surface of the screen B of the inner screen. It can be learned from FIG. 3C and FIG. 4C that when the inner screen (namely, the foldable screen including the screen A and the screen B) of the electronic device 100 is in an expanded form, the outer screen (namely, the screen C) is also in the expanded form. When the inner screen of the electronic device 100 is folded, the outer screen is also folded accordingly. When the inner screen of the electronic device 100 is in a folded state, the outer screen is also in the folded state.

It can be understood that for the electronic device 100 with the screen C, when the inner screen (namely, the foldable screen including the screen A and the screen B) is in the folded form, the electronic device 100 may display a user interface on the screen C. When the inner screen is in a half-folded form or the expanded form, the electronic device 100 may display the user interface on the screen A, the screen B, and/or the screen C.

In this embodiment of this application, the electronic device 100 may determine, based on a detected included angle $\alpha$ (namely, a first included angle) between the screen A and the screen B, the form of the inner screen disposed as the foldable screen. In some embodiments, a value range of the included angle $\alpha$ between the screen A and the screen B of the foldable screen (the vertically foldable screen or the horizontally foldable screen) of the electronic device 100 is [0°, 180°], and the electronic device 100 cannot be folded reversely. In some embodiments, the value range of the included angle $\alpha$

between the screen A and the screen B of the foldable screen (the vertically foldable screen or the horizontally foldable screen) of the electronic device 100 is [180°, 360°], and the electronic device 100 cannot be folded forward. In some embodiments, the value range of the included angle $\alpha$ between the screen A and the screen B of the foldable screen (the vertically foldable screen or the horizontally foldable screen) of the electronic device 100 is [0°, 360°], and the electronic device 100 can be folded forward and reversely.

For example, the value range of $\alpha$ is [0°, 360°]. When $\alpha \in$ [0°, P1), the electronic device 100 may determine that the foldable screen is in a forward folded form; when $\alpha \in$ [P1, P2), the electronic device 100 may determine that the foldable screen is in a forward half-folded form; when $\alpha \in$ [P2, P3), the electronic device 100 may determine that the foldable screen is in the expanded form; when $\alpha \in$ [P3, P4), the electronic device 100 may determine that the foldable screen is in a reverse half-folded form; and when $\alpha \in$ [P4, 360], the electronic device 100 may determine that the foldable screen is in the reverse folded form, where 0° < P1 < P2 $\leq$ 180° < P3 < P4 $\leq$ 360°. P1, P2, P3, and P4 are preset angle thresholds. P1, P2, P3, and P4 may be set by the user in the electronic device 100, or may be set by the electronic device 100 by default.

In some embodiments, a difference between P1 and 0°, a difference between P2 and 180°, a difference between P3 and 180°, and a difference between P4 and 360° are all preset error values set by the electronic device 100 or the user. For example, if the preset error value is equal to 2°, P1, P2, P3, and P4 are respectively 2°, 178°, 172°, and 358°.

In some embodiments, P1, P2, P3, and P4 may be determined based on a usage habit of the user using the foldable screen. For example, based on usage habits of most users, when the included angle $\alpha$ between the screen A and the screen B is less than 50°, there is a high probability that the user intends not to use the screen A or the screen B. When the included angle $\alpha$ between the screen A and the screen B is greater than 50° and less than or equal to 160° (or $\alpha$ is greater than 190° and less than or equal to 280°), there is a high probability that the user intends to use the screen A and the screen B to display different display content. When the included angle $\alpha$ between the screen A and the screen B is greater than 160° and less than or equal to 190°, there is a high probability that the user intends to use the screen A and the screen B as a whole (that is, as a complete display). When the included angle between the screen A and the screen B is greater than 280° and less than or equal to 360°, there is a high probability that the user intends to use the screen A or the screen B alone. Based on the usage habit, a value range of P1 may be (0, 40°], a value range of P2 may be [160°, 180°), a value range of P3 may be [180°, 190°), and a value range of P4 may be [280°, 360°). For example, P1 is 30°, P2 is 170°, P3 is 185°, and P4 is 300°.

It should be noted that, in this embodiment of this application, the at least two displays formed by folding the foldable screen may be a plurality of independent displays, or may be one complete display of an integrated structure that is folded to form at least two parts.

In some embodiments, the foldable screen of the electronic device 100 may surround the electronic device 100, and the screen A, the screen B, and the screen C each may be a part of the foldable screen.

For example, the foldable screen may be a flexible foldable screen, and the flexible foldable screen includes a folding edge made of a flexible material. A part or all of the flexible foldable screen is made of the flexible material. At least two screens formed by folding the flexible foldable screen are a complete screen of an integrated structure that is folded to form at least two parts.

For another example, the foldable screen may be a multi-screen foldable screen. The multi-screen foldable screen may include a plurality of (two or more) displays. The plurality of displays are a plurality of separate displays. The plurality of displays may be sequentially connected by using folding axes. Each screen may rotate around a folding axis connected to the screen, thereby implementing folding of the multi-screen foldable screen.

In the following embodiments of this application, an example in which the foldable screen is a flexible foldable screen that can be folded horizontally is used to describe the device control method provided in embodiments of this application.

**The following describes, with reference to the accompanying drawings, the electronic device 100 provided in embodiments of this application.**

The electronic device 100 may be a terminal device running iOS, Android, Microsoft, or another operating system. For example, the electronic device 100 may be a device including the foregoing foldable screen, such as a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), or an augmented reality (augmented reality, AR)/virtual reality (virtual reality, VR) device. A specific type of the electronic device 100 is not specifically limited in embodiments of this application.

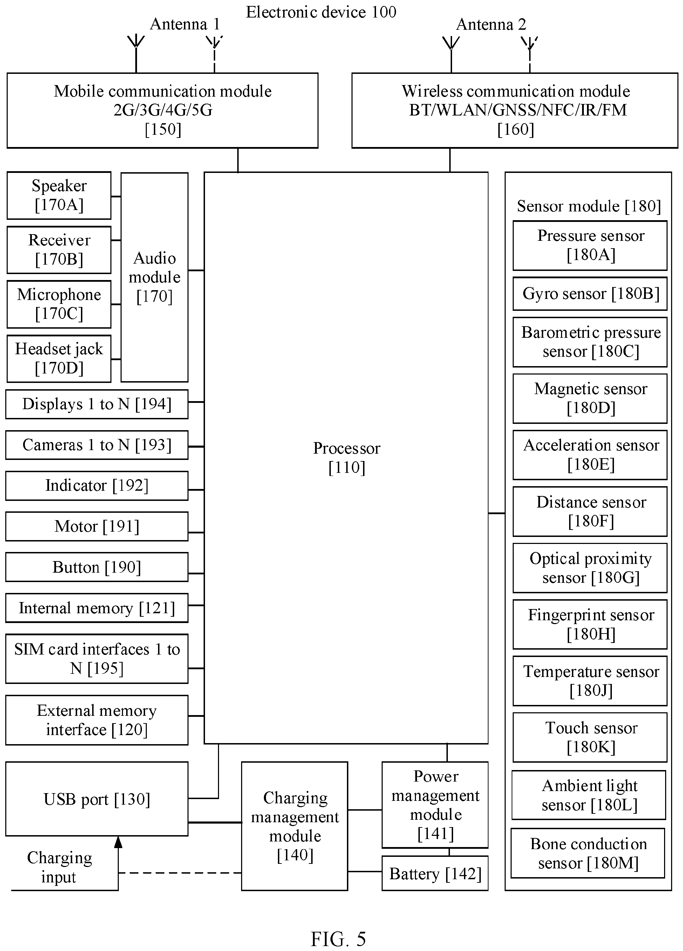

For example, FIG. 5 is a schematic diagram of a structure of the electronic device 100. As shown in FIG. 5, the electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem (modem), a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal to complete control of instruction fetching and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) port, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call by using a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call by using a Bluetooth headset. Both the I2S interface and the PCM interface may be used for audio communication.

The UART interface is a universal serial data bus, and is configured to perform asynchronous communication. The bus may be a two-way communications bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music by using a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as the I2C interface, the I2S interface, the UART interface, the MIPI interface, or the like.

The USB port 130 is a port that conforms to a USB standard specification, and may be specifically a mini USB port, a micro USB port, a USB Type-C port, or the like. The USB port 130 may be configured to connect to a charger to charge the electronic device 100, or may be configured to transmit data between the electronic device 100 and a peripheral device. The USB port 130 may alternatively be configured to connect to a headset, to play an audio by using the headset. The port may alternatively be configured to connect to another electronic device such as an AR device.

It may be understood that an interface connection relationship between the modules shown in this embodiment of the present invention is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of the wired charger through the USB port 130. In some embodiments of wireless charging, the charging management module 140 may receive a wireless charging input through a wireless charging coil of the electronic device 100. The charging management module 140 may further supply power to the electronic device 100 by using the power management module 141 while charging the battery 142.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electricity leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave by using the antenna 1 for radiation. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate the received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 implements a display function by using the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. For example, during photographing, a shutter is opened, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to processing the digital image signal. For example, when the electronic device 100 selects a frequency, the digital signal processor is configured to perform Fourier transform on frequency energy, and the like.

The video codec is configured to: compress or decompress a digital video. The electronic device 100 may support one or more video codecs. In this way, the electronic device 100 may play or record videos in a plurality of coding formats, for example, moving picture experts group (moving picture experts group, MPEG) 1, MPEG 2, MPEG 3, and MPEG 4.

The NPU is a neural-network (neural-network, NN) computing processor. The NPU quickly processes input information by referring to a structure of a biological neural network, for example, with reference to a transfer mode between human brain neurons, and may further continuously perform self-learning. Applications such as intelligent cognition of the electronic device 100 may be implemented by using the NPU, for example, image recognition, facial recognition, speech recognition, and text understanding.

The internal memory 121 may include one or more random access memories (random access memory, RAM) and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a 5th generation DDR SDRAM is usually referred to as a DDR5 SDRAM), and the like. The non-volatile memory may include a magnetic disk storage device, a flash memory (flash memory), and the like.

The flash memory may be classified, based on an operation principle, into an NOR flash, an NAND flash, a 3D NAND flash, and the like; may be classified, based on a quantity of electric potential levels of a cell, into a single-level cell (single-level cell, SLC), a multi-level cell (multi-level cell, MLC), a triple-level cell (triple-level cell, TLC), a quad-level cell (quad-level cell, QLC), and the like; or the flash memory may be classified, based on storage specifications, into a universal flash storage (English: universal flash storage, UFS), an embedded multimedia memory (embedded multimedia Card, eMMC), and the like.

The random access memory may be directly read and written by using the processor 110. The random access memory may be configured to store an executable program (for example, machine instructions) in an operating system or another running program, and may be further configured to store data of a user, data of an application, and the like.

The non-volatile memory may also store an executable program, data of a user, data of an application, and the like, which may be loaded into the random access memory in advance for directly reading and writing by the processor 110.

The external memory interface 120 may be configured to connect to an external non-volatile memory, to extend a storage capability of the electronic device 100. The external non-volatile memory communicates with the processor 110 through the external memory interface 120, to implement a data storage function. For example, files such as music and videos are stored in the external non-volatile memory.

The electronic device 100 may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input to a digital audio signal. The audio module 170 may be further configured to: code and decode an audio signal. In some embodiments, the audio module 170 may be disposed in the processor 110, or some functional modules in the audio module 170 are disposed in the processor 110.

The speaker 170A, also referred to as a "horn", is configured to convert an audio electrical signal into a sound signal.

The receiver 170B, also referred to as an "earpiece", is configured to convert the audio electrical signal into the sound signal.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and may convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor.

The gyro sensor 180B may be configured to determine a motion posture of the electronic device 100. In some embodiments, an angular velocity of the electronic device 100 around three axes (namely, axes x, y, and z) may be determined by using the gyro sensor 180B. The gyro sensor 180B may be configured to implement image stabilization during photographing. For example, when a shutter is pressed, the gyro sensor 180B detects an angle at which the electronic device 100 jitters, obtains, through calculation based on the angle, a distance for which a lens module needs to compensate, and allows the lens to cancel the jitter of the electronic device 100 through reverse motion, to implement image stabilization. The gyro sensor 180B may be further used in navigation and motion sensing game scenarios.

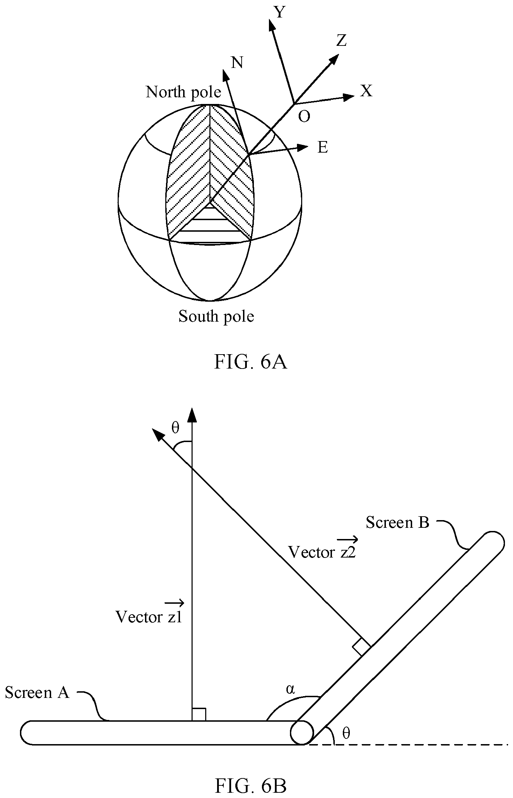

It should be noted that a coordinate system of the gyro sensor is a geographic coordinate system. As shown in FIG. 6A, in the geographic coordinate system, an origin O is located at a point at which a carrier (that is, a device including the gyro sensor, for example, the electronic device 100) is located, an axis X points to the east (E) along a local latitude line, an axis Y points to the north (N) along a local meridian line, and an axis Z points upward along a local geographic perpendicular line and forms a right-hand rectangular coordinate system together with the axis X and the axis Y A plane formed by the axis X and the axis Y is a local horizontal plane, and a plane formed by the axis Y and the axis Z is a local meridian plane. Therefore, it may be understood that a coordinate system of the gyro sensor is as follows: using the gyro sensor as the origin O, using a direction pointing to the east along the local latitude line as the axis X, using a direction pointing to the north along the local meridian line as the axis Y, and using a direction pointing upward along the local geographic perpendicular line (that is, in a reverse direction of the geographic perpendicular line) as the axis Z.

In this embodiment of this application, the display 194 of the electronic device 100 may be folded to form a plurality of displays. The gyro sensor 180B may be disposed in each display, and is configured to measure an orientation of the display (namely, a direction vector perpendicular to the display and pointing from the inside to the outside of the electronic device 100). The electronic device 100 may determine an included angle between adjacent displays based on an orientation change that is of each display and that is obtained through measurement of the gyro sensor 180B.

Refer to FIG. 1A to FIG. 2F. The display 194 of the electronic device 100 may be folded to form adjacent screens A and B. A gyro sensor A is disposed on the screen A, and the electronic device 100 may measure an orientation of the screen A by using the gyro sensor A. A gyro sensor B is disposed on the screen B, and the electronic device 100 may measure an orientation of the screen B by using the gyro sensor B. The electronic device 100 may determine the included angle $\alpha$ between the screen A and the screen B based on orientation changes that are of the screen A and the screen B and that are obtained through measurement. The following describes a principle of obtaining the included angle $\alpha$ in detail.

For example, FIG. 6B is a schematic diagram of the included angle $\alpha$ between the screen A and the screen B. As shown in FIG. 6B, the electronic device 100 obtains, through measurement by using the gyro sensor A, a vector $\vec{z1}$ of the orientation of the screen A, and obtains, through measurement by using the gyro sensor B, a vector $\vec{z2}$ of the orientation of the screen B. The vector $\vec{z1}$ is perpendicular to the screen A, and the vector $\vec{z2}$ is perpendicular to the screen B. The electronic device 100 can calculate an included angle $\theta$ between the vector $\vec{z1}$ and the vector $\vec{z2}$ by using Formula (1), and further, the electronic device 100 may determine the included angle $\alpha$ of the screen A and the screen B, that is, $\alpha = 180° - \theta$.

$$\theta = \arccos\left(\frac{\vec{z1}\cdot\vec{z2}}{|\vec{z1}|\times|\vec{z2}|}\right) \quad \text{Formula (1)}$$

It should be noted that although a position of the gyro sensor A in the screen A and a position of the gyro sensor B in the screen B do not overlap, that is, origins of coordinate systems of the two gyro sensors do not overlap, two X axes of the two coordinate systems are parallel, two Y axes are parallel, and two Z axes are also parallel. In this way, although the vector $\vec{z1}$ and the vector $\vec{z2}$ are measured in different coordinate systems by using different gyro sensors, because the axes of the coordinate systems of the two gyro sensors are parallel, the electronic device 100 can calculate the included angle $\theta$ between the vector $\vec{z1}$ and the vector $\vec{z2}$ by using Formula (1).

In some embodiments, the electronic device 100 measures an included angle between adjacent screens of the foldable screen by using one or more acceleration sensors, for example, the included angle $\alpha$ between the screen A and the screen B. For example, one acceleration sensor may be disposed on each display of the foldable screen. The electronic device 100 (for example, the processor 110) may measure, by using the acceleration sensor, a motion acceleration when each display is rotated; and then calculate, based on the measured motion acceleration, an angle at which one display rotates relative to another display, for example, the included angle $\alpha$ between the screen A and the screen B.

In some embodiments, the gyro sensor may be a virtual gyro sensor formed by cooperating with a plurality of other sensors. The virtual gyro sensor may be configured to calculate an included angle between adjacent screens of the foldable screen, for example, the included angle $\alpha$ between the screen A and the screen B.

In some other embodiments, an angle sensor is installed at a folding part (for example, on a rotating shaft) of the electronic device 100, and the electronic device 100 may measure an included angle between adjacent screens of the foldable screen by using the angle sensor, for example, the included angle $\alpha$ between the screen A and the screen B.

In this embodiment of this application, the electronic device 100 may further measure an included angle $\beta1$ between the screen A and a horizontal plane by using the gyro sensor A, and measure an included angle $\beta2$ between the screen B and the horizontal plane by using the gyro sensor B.

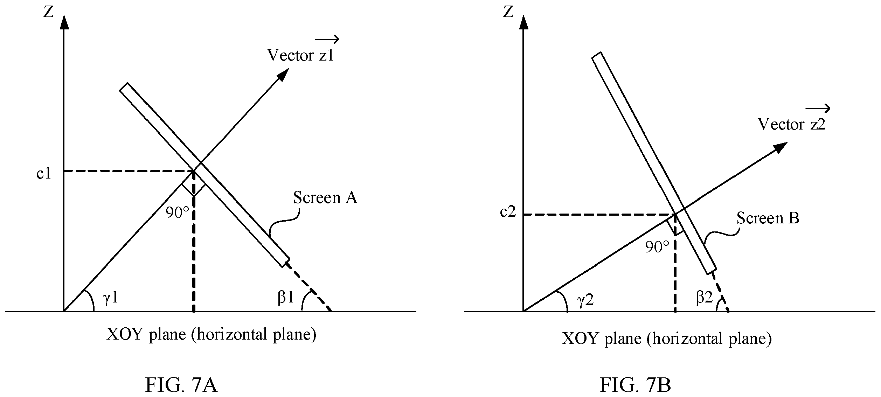

For example, FIG. 7A is a schematic diagram of the included angle between the screen A and the horizontal plane. An XOY plane formed by an X axis and a Y axis is a local horizontal plane, and a plane formed by the Y axis and a Z axis is a local meridian plane. The orientation that is of the screen A of the electronic device 100 and that is in the coordinate system of the gyro sensor A is the vector $\overrightarrow{z1}$ = (a1, b1, c1). An included angle γ1 between the vector $\overrightarrow{z1}$ and the XOY plane (namely, the horizontal plane) has the following relationship: c1 = $|\overrightarrow{z1}|$ × sinγ1. The screen A of the electronic device 100 is perpendicular to the vector $\overrightarrow{z1}$, the included angle β1 between a plane on which the screen A of the electronic device 100 is located and the horizontal plane and the included angle γ1 are complementary to each other, that is, β1 + γ1 = 90°. It can be learned that the included angle β1 has the following relationship with the vector $\overrightarrow{z1}$: c1 = $\overrightarrow{z1}$× cosβ1, where

$$\beta1 = \arccos\left(\frac{c1}{|\overrightarrow{z1}|}\right) \quad \text{Formula (2)}$$

For example, FIG. 7B is a schematic diagram of the included angle between the screen B and the horizontal plane. The XOY plane formed by the X axis and the Y axis is the local horizontal plane, and the plane formed by the Y axis and the Z axis is the local meridian plane. The orientation that is of the screen B of the electronic device 100 and that is in the coordinate system of the gyro sensor is the vector $\overrightarrow{z2}$ = (a2, b2, c2). An included angle γ2 between the vector $\overrightarrow{z2}$ and the XOY plane (namely, the horizontal plane) has the following relationship: c2 = $\overrightarrow{z2}$× sinγ2. The screen B of the electronic device 100 is perpendicular to the vector $\overrightarrow{z2}$, the included angle β2 between a plane on which the screen B of the electronic device 100 is located and the horizontal plane and the included angle γ2 are complementary to each other, that is, β2 + γ2 = 90°. It can be learned that the included angle β2 has the following relationship with the vector $\overrightarrow{z2}$: c2 = $\overrightarrow{z2}$× cosβ2, where

$$\beta2 = \arccos\left(\frac{c2}{|\overrightarrow{z2}|}\right) \quad \text{Formula (3)}$$

In conclusion, the electronic device 100 may determine the included angle β1 between the screen A and the horizontal plane by using Formula (2) after obtaining the vector $\overrightarrow{z1}$ corresponding to the orientation that is of the screen A and that is measured by using the gyro sensor A. In conclusion, the electronic device 100 may determine the included angle β2 between the screen B and the horizontal plane by using Formula (3) after obtaining the vector $\overrightarrow{z2}$ corresponding to the orientation that is of the screen B and that is measured by using the gyro sensor B.

The barometric pressure sensor 180C is configured to measure barometric pressure. In some embodiments, the electronic device 100 calculates an altitude through the barometric pressure measured by the barometric pressure sensor 180C, to assist in positioning and navigation.

The acceleration sensor 180E may detect accelerations in various directions (usually on three axes) of the electronic device 100, and may detect magnitude and a direction of gravity when the electronic device 100 is static. The acceleration sensor 180E may be further configured to identify a posture of the electronic device 100, and is used in an application such as switching between a landscape mode and a portrait mode or a pedometer.

The distance sensor 180F is configured to measure a distance. The electronic device 100 may measure a distance in an infrared manner or a laser manner. In some embodiments, in a photographing scenario, the electronic device 100 may measure a distance through the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode.

The ambient light sensor 180L is configured to sense ambient light brightness. The electronic device 100 may adaptively adjust brightness of the display 194 based on the sensed ambient light brightness.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J.

The touch sensor 180K is also referred to as a "touch component". The touch sensor 180K may be disposed on the display 194, and the touch sensor 180K and the display 194 form a touchscreen, which is also referred to as a "touchscreen". The touch sensor 180K is configured to detect a touch operation performed on or near the touch sensor 180K. The touch sensor may transfer the detected touch operation to the application processor to determine a type of a touch event. A visual output related to the touch operation may be provided by using the display 194. In some other embodiments, the touch sensor 180K may also be disposed on a surface of the electronic device 100 at a location different from that of the display 194.

The bone conduction sensor 180M may obtain a vibration signal.

The button 190 includes a power button, a volume button, and the like. The button 190 may be a mechanical button, or may be a touch button.

The motor 191 may generate a vibration prompt.

The indicator 192 may be an indicator lamp, and may be configured to indicate a charging status, a power change; a message, a notification, and the like.

The SIM card interface 195 is configured to connect to an SIM card.

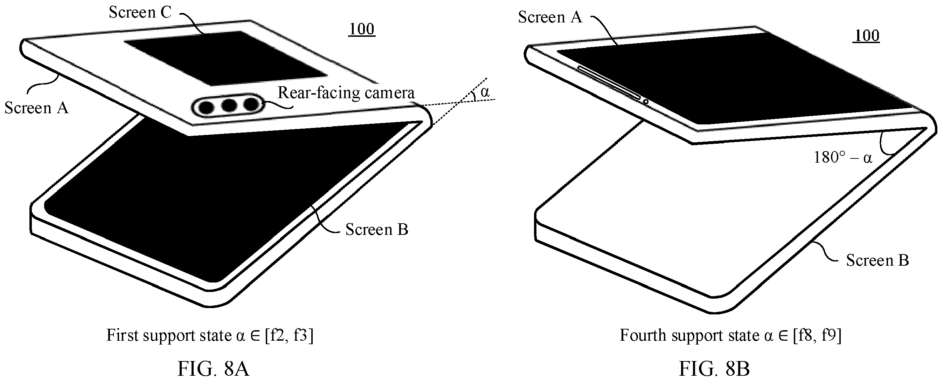

**Refer to FIG. 8A to FIG. 8F. The following describes several support states related to an electronic device 100 according to an embodiment of this application.**

In some embodiments, when the electronic device 100 detects that an included angle $\beta 2$ between a screen B and a horizontal plane falls within a preset range 11 (namely, [0, f1], for example, f1 = 10°), an included angle $\beta 5$ between a vector $\overrightarrow{z2}$ corresponding to the screen B and a Z axis of a geographic coordinate system is less than 90°, and an included angle $\alpha$ between a screen A and the screen B falls within a preset range [f2, f3], it is determined that the electronic device 100 is in a first support state. 0° < f2 < f3 ≤ 90°. For example, f2 = 20°, and f3 = 90°. For example, FIG. 8A is a schematic diagram of the first support state of the electronic device 100.

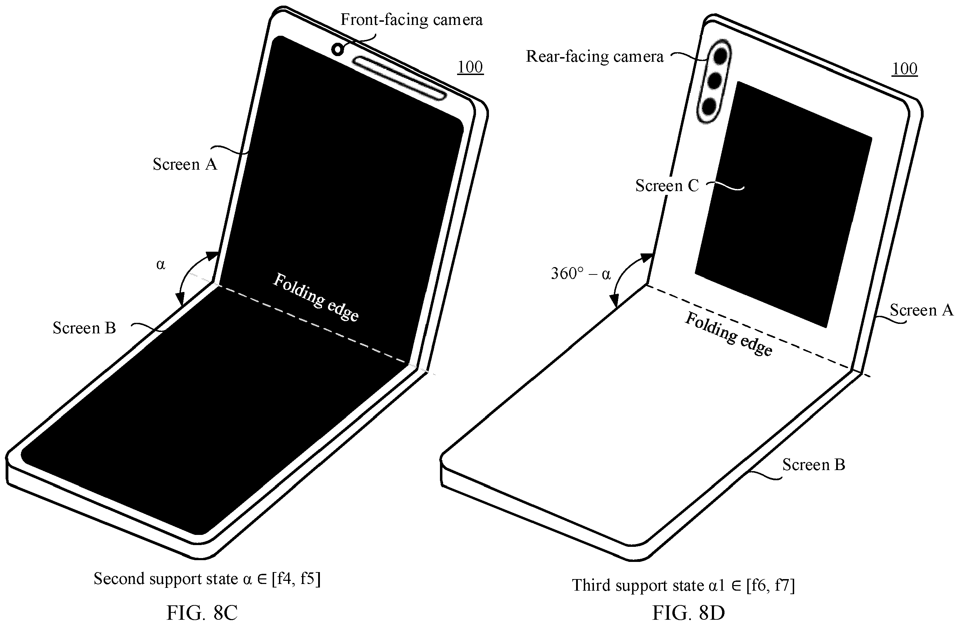

In some embodiments, when the electronic device 100 detects that the included angle $\beta 2$ between the screen B and the horizontal plane falls within the preset range 11, the included angle $\beta 5$ between the vector $\overrightarrow{z2}$ corresponding to the screen B and the Z axis of the geographic coordinate system is less than 90°, and the included angle $\alpha$ between the screen A and the screen B falls within a preset range [f4, f5], it is determined that the electronic device 100 is in a second support state. 90° ≤ f4 < f5 < 180°. For example, f4 = 90°, and f5 = 160°. For example, FIG. 8C is a schematic diagram of the second support state of the electronic device 100.

It may be understood that, as shown in FIG. 8A and FIG. 8C, in the first support state and the second support state, the screen B of the electronic device 100 is horizontally (or nearly horizontally) placed upward, and the electronic device 100 is in a forward half-folded state.

In some embodiments, when the electronic device 100 detects that the included angle $\beta 2$ between the screen B and the horizontal plane falls within the preset range 11, the included angle $\beta 5$ between the vector $\overrightarrow{z2}$ corresponding to the screen B and the Z axis of the geographic coordinate system is greater than 90°, and the included angle $\alpha$ between the screen A and the screen B falls within a preset range [f6, f7], it is determined that the electronic device 100 is in a third support state. 180° < f6 < f7 ≤ 270°. For example, f6 = 200°, and f7 = 270°. For example, FIG. 8D is a schematic diagram of the third support state of the electronic device 100.

In some embodiments, when the electronic device 100 detects that the included angle $\beta 2$ between the screen B and the horizontal plane falls within the preset range 11, the included angle $\beta 5$ between the vector $\overrightarrow{z2}$ corresponding to the screen B and the Z axis of the geographic coordinate system is greater than 90°, and the included angle $\alpha$ between the screen A and the screen B falls within a preset range [f8, f9], it is determined that the electronic device 100 is in a fourth support state. 270° ≤ f8 < f9 < 360°. For example, f8 = 270°, and f9 = 340°. For example, FIG. 8B is a schematic diagram of the fourth support state of the electronic device 100.

It may be understood that, as shown in FIG. 8D and FIG. 8B, in the third support state and the fourth support state, the screen B is horizontally (or nearly horizontally) placed downward, and the electronic device 100 is in a reverse half-folded state.

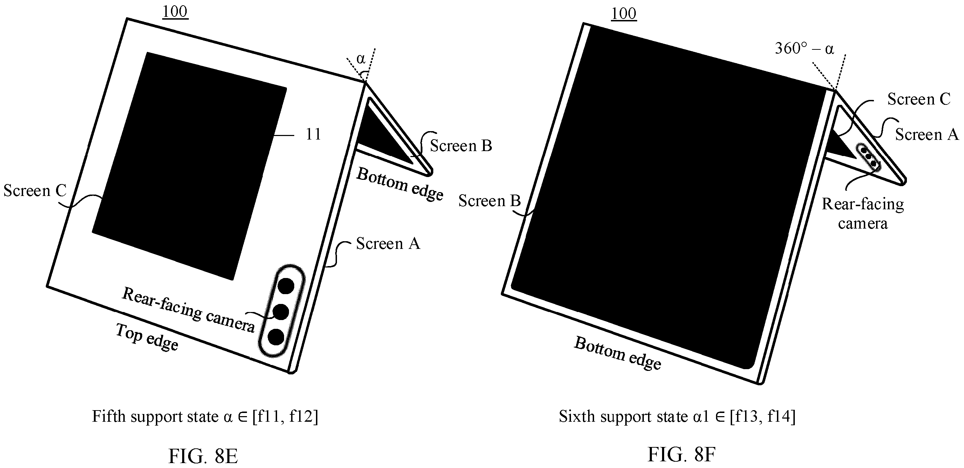

In some embodiments, when the electronic device 100 detects that a difference between an included angle $\beta 1$ between the screen A and the horizontal plane and the included angle $\beta 2$ falls within a preset range [0°, f10°] (for example, f10° = 5°), the included angle $\beta 5$ between the vector $\overrightarrow{z2}$ corresponding to the screen B and the Z axis of the geographic coordinate system is greater than 90°, and the included angle $\alpha$ between the screen A and the screen B falls within a preset range [f11, f12], the electronic device 100 is in a fifth support state. 0° < f11 < f12 < 180°. For example, f11 = 30°, and f12 = 150°. For example, FIG. 8E is a schematic diagram of the fifth support state of the electronic device 100. It may be understood that, in the fifth support state, a plane formed by a top edge and a bottom edge of the electronic device 100 is a horizontal plane or close to a horizontal plane, and the electronic device 100 is in the forward half-folded state.

In some embodiments, when the electronic device 100 detects that the difference between the included angle $\beta 1$ between the screen A and the horizontal plane and the included angle $\beta 2$ falls within the preset range [0°, f10°], the included angle $\beta 5$ between the vector $\overrightarrow{z2}$ corresponding to the screen B and the Z axis of the geographic coordinate system is less than 90°, and the included angle $\alpha$ between the screen A and the screen B falls within a preset range [f13, f14], the electronic device 100 is in a sixth support state. 180° < f13 < f14 < 360°. For example, f13 = 210°, and f14 = 330°. For example, FIG. 8F is a schematic diagram of the sixth support state of the electronic device 100. It may be understood that, in the sixth support state, the plane formed by the top edge and the bottom edge of the electronic device 100 is the horizontal plane or close to the horizontal plane, and the electronic device 100 is in the reverse half-folded state.

In the six support states, an additional support apparatus (for example, a mobile phone holder) does not need to be installed for the electronic device 100. In a case in which hands are freed, a user can view content displayed on a preset display more conveniently. For example, the first support state, the third support state, and the fifth support state may facilitate the user to view content displayed on a screen C. The second support state facilitates the user to view content displayed on the screen A and screen B. The fourth support state facilitates the user to view content displayed on the screen A. The sixth support state facilitates the user to view content displayed on the screen A or the screen B.

In embodiments of this application, to avoid privacy information leakage, when entering a scenario (for example, an important conference) in which confidentiality is required, a user may disable functional modules such as a microphone, a camera, and a positioning module of the electronic device 100. After the user leaves the scenario in which confidentiality is required, normal use of the functional modules of the electronic device 100 may be recovered. For ease of description, in embodiments of this application, the functional modules such as the microphone, the camera, and the positioning module that can obtain the privacy information are collectively referred to as privacy information obtaining modules, and a working mode for disabling the privacy information obtaining modules of the electronic device 100 is briefly referred to as a privacy mode.

In some embodiments, the privacy mode includes all privacy information obtaining modules of the electronic device 100, and the electronic device 100 sets a switch 1 of the privacy mode in system setting options. The switch 1 has two states: enabled and disabled. The enabled state indicates that all privacy information obtaining modules are disabled, and the disabled state indicates that all privacy information obtaining modules are not disabled, and all privacy information obtaining modules can be used normally.

According to the foregoing solution, the user can control disabling and recovery of all privacy information obtaining modules. However, when the switch 1 is set in the system setting options, the user needs a plurality of layers of input operations to enable the electronic device 100 to display the switch 1, and then control the privacy information obtaining module by using the switch 1. For example, when the user controls the privacy mode, the following steps are required: The user unlocks the electronic device 100, and the electronic device 100 displays a home screen. The user finds and taps a setting icon displayed on the home screen, and the electronic device 100 displays a plurality of system setting options. The user finds and taps a security and privacy setting option in the plurality of system setting options, and the electronic device 100 displays a plurality of privacy setting options. The user finds and taps the privacy mode in the plurality of privacy setting options, and the electronic device 100 displays the switch 1. The user controls the disabling and recovery of the privacy information obtaining module in the privacy mode by using the switch 1. Obviously, user operations required in the foregoing solution are lengthy and complex, which greatly reduces user experience. In addition, in the foregoing solution, only all privacy information obtaining modules can be disabled or recovered, and some privacy information obtaining modules cannot be selectively disabled based on a user requirement.

An embodiment of this application further provides a device control method. In the method, after placing an electronic device 100 in which a foldable screen is disposed in a first preset posture, a user can trigger, by using a first preset operation, the electronic device 100 to disable at least one preset privacy information obtaining module (for example, enabling a privacy mode and disabling all privacy information obtaining modules included in the privacy mode). After the at least one privacy information obtaining module is disabled, the user can trigger, by using a second preset operation, the electronic device 100 to recover normal use of the at least one privacy information obtaining module. In this embodiment of this application, when entering a scenario in which confidentiality is required, the user can quickly and naturally disable the privacy information obtaining module based on a physical gesture feature of the electronic device 100 and simple user interaction, to prevent privacy information from being stolen. Then, the privacy information obtaining module can be enabled again quickly and naturally through simple user interaction. In this way, control efficiency of the privacy information obtaining module and use experience are effectively improved. In addition, in some embodiments, the user may set privacy information obtaining modules included in the privacy mode. Therefore, the proposed method can meet requirements of different users.

**The following describes specific implementations of the foregoing device control method in detail.**

It should be noted that the privacy information obtaining module in this embodiment of this application may include at least one of modules such as a camera, a microphone, a positioning module, a Bluetooth module, a Wi-Fi module, and a mobile data network module, and may further include another module. This is not specifically limited herein. In Implementation 1, disabling the privacy information obtaining module may mean that the privacy information obtaining module stops working. For example, disabling the camera may mean that the camera is prohibited from collecting image data. Disabling the microphone may mean that the microphone is prohibited from collecting audio data. Disabling the positioning module may mean that the positioning module is prohibited from obtaining a geographical position of the electronic device 100. Disabling the Bluetooth module, the Wi-Fi module, and the mobile data network module may respectively mean to disable the Bluetooth, the Wi-Fi, and the mobile data network. In Implementation 2, disabling the privacy information obtaining module may mean to keep the privacy information obtaining module working normally, but prohibiting a third-party application from using the privacy information obtaining module and obtaining related information of the privacy information obtaining module. In the following embodiments, Implementation 1 is used as an example for description.

In this embodiment of this application, the privacy information obtaining modules included in the privacy mode may be set by the electronic device 100 by default, may be set by the user, or may be set based on indication information of another device.

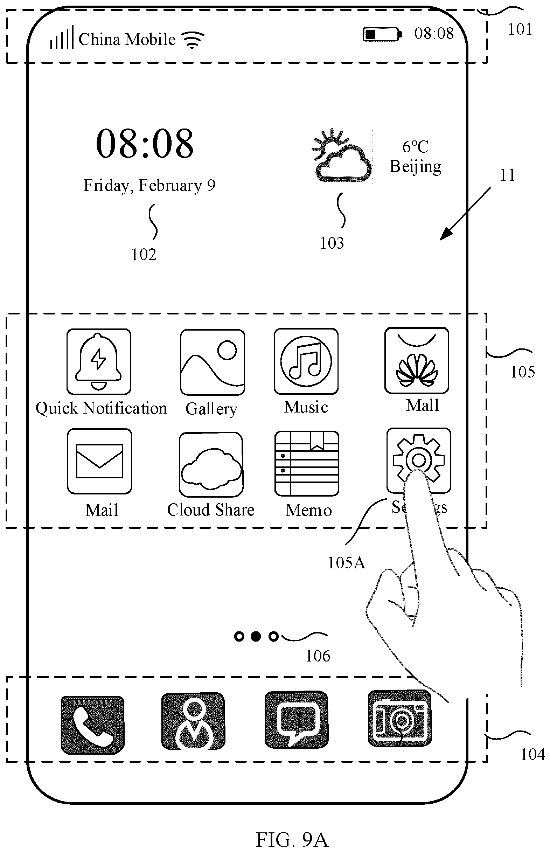

The following describes how the user sets the privacy information obtaining module included in the privacy mode. For example, FIG. 9A to FIG. 9E are schematic diagrams of user interfaces for setting the privacy mode.

FIG. 9A shows a home screen 11 that is on the electronic device 100 and that is used to display an application installed on the electronic device 100. The home screen 11 may include a status bar 101, a calendar indicator 102, a weather indicator 103, a tray 104 having a frequently used application icon, and another application icon 105. The another application icon 105 may present a settings icon 105A or the like. The home screen 11 may also include a page indicator 106. Other application icons may be distributed on a plurality of pages, and the page indicator 106 may be used to indicate a specific page on which an application is currently viewed by the user.

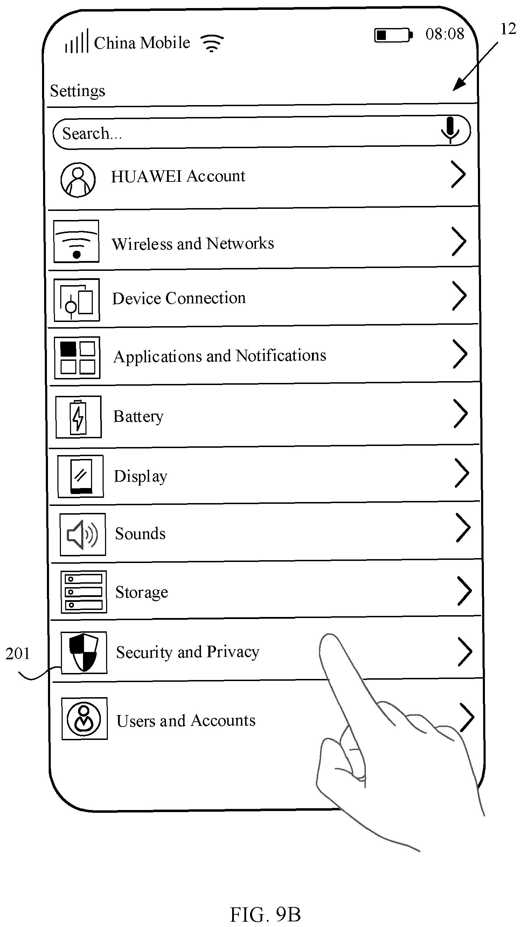

The settings icon 105A may receive an input operation (for example, a touch operation) of the user. In response to the input operation, the electronic device 100 may display a user interface 12 of the settings shown in FIG. 9B. The user interface 12 may include a security and privacy setting entry 201, and may further include a Huawei Account setting entry, a wireless and networks setting entry, a device connection setting entry, an applications and notifications setting entry, and the like. The security and privacy setting entry 201 may be used to set the privacy mode, face unlock, a fingerprint, a lock screen password, an application lock, and the like.

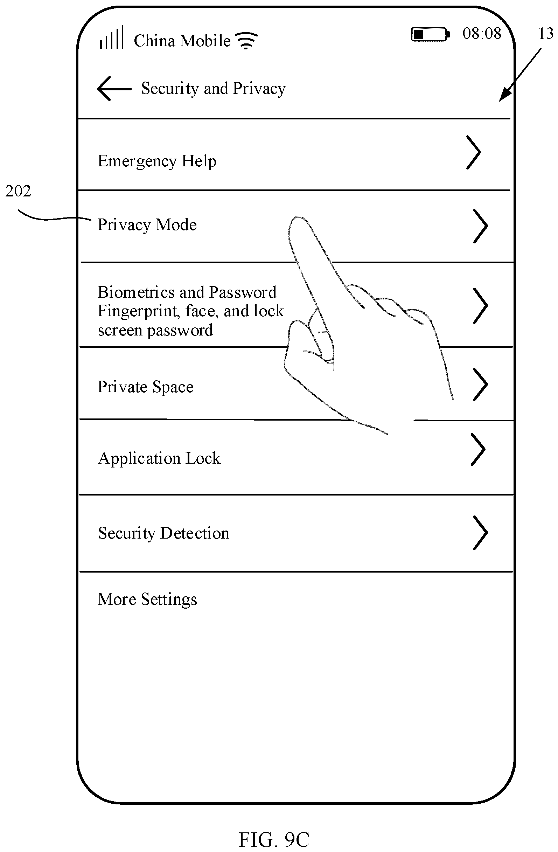

The security and privacy setting entry 201 may receive an input operation (for example, a touch operation) of the user. In response to the input operation, the electronic device 100 may display a user interface 13 shown in FIG. 9C. The user interface 13 may include a privacy mode entry 202, and may further include an emergency help setting entry, a biometrics and password setting entry, a private space setting entry, and the like.

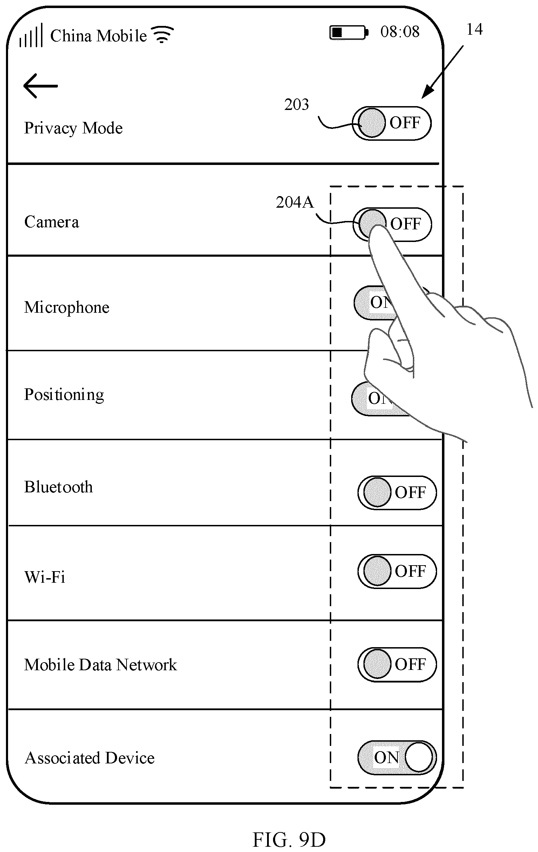

The privacy mode entry 202 may receive an input operation (for example, a touch operation) of the user. In response to the input operation, the electronic device 100 may display a user interface 14 shown in FIG. 9D. The user interface 14 may include a switch control 203 and switches of the privacy information obtaining modules of the electronic device 100, for example, a switch control 204A of the camera, a switch control of the microphone, and a switch control of the positioning module. The switch control 203 is configured to enable or disable the privacy mode, and the switch control of the privacy information obtaining module is configured to add or remove the privacy information obtaining module for the privacy mode. For example, when the switch 204A is in an on (ON) state, the privacy information obtaining module of the privacy mode includes the camera. When the switch control 204A is in an off (OFF) state, the privacy information obtaining module of the privacy mode does not include the camera.

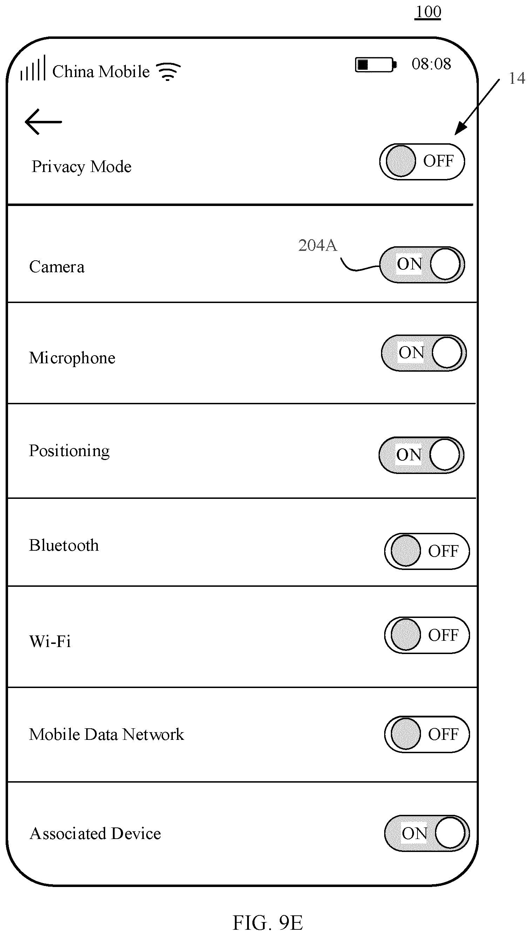

For example, the switch control 204A shown in FIG. 9D is in the off (OFF) state, and the switch control 204A may receive an input operation (for example, a touch operation) of the user. In response to the input operation, the electronic device 100 may switch the state of the switch control 204A to the on (ON) state shown in FIG. 9E, and add the camera as the privacy information obtaining module of the privacy mode.

The following describes how to set, based on the indication information of the another device, the privacy information obtaining module included in the privacy mode.

In some embodiments, the electronic device 100 receives indication information sent by an electronic device 200, and the indication information indicates a privacy information obtaining module included in the privacy mode. The electronic device 100 sets, based on the indication, the privacy information obtaining module included in the privacy mode. In an implementation, the electronic device 100 receives the indication information sent by the electronic device 200 through broadcast. In an implementation, before the electronic device 100 receives the indication information sent by the electronic device 200, the electronic device 100 establishes a communication connection to the electronic device 200. The communication connection may be any one of a Wi-Fi connection, a Bluetooth connection, an NFC connection, or a UWB connection. The electronic device 100 receives the indication information sent by the electronic device 200 through the communication connection.

In a scenario, the electronic device 200 corresponding to a first place broadcasts the indication information. When the user carries the electronic device 100 near or into the first place in which confidentiality is required, the electronic device 100 receives the indication information sent by the electronic device 200. In a scenario, when the user carries the electronic device 100 near or into a first place in which confidentiality is required, the electronic device 100 accesses a local area network of the first place through an access point (namely, the electronic device 200). After accessing the local area network, the electronic device 100 receives the indication information sent by the first access point. In a scenario, when the user carries the electronic device 100 into a first place in which confidentiality is required, the user brings the electronic device 100 close to an NFC device (namely, the electronic device 200) in the first place, and reads label information of the NFC device, where the label information includes the indication information.

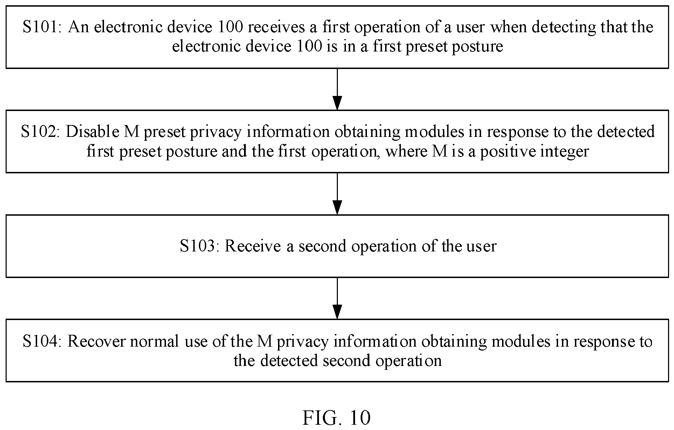

**FIG. 10 is an example of a method flowchart of the foregoing device control method. As shown in FIG. 10, the method includes but is not limited to steps S101 to S105.**

S101: An electronic device 100 receives a first operation of a user when detecting that the electronic device 100 is in a first preset posture.

S102: Disable M preset privacy information obtaining modules in response to the detected first preset posture and the first operation, where M is a positive integer.

The M preset privacy information obtaining modules include at least one of modules such as a camera, a microphone, a positioning module, a Wi-Fi module, a Bluetooth module, and a mobile data network module.

In some embodiments, the electronic device 100 enables a privacy mode in response to the detected first preset posture and the first operation, that is, disables all privacy information obtaining modules included in the privacy mode of the electronic device 100.

In some embodiments, after step S101, the method further includes: The electronic device 100 sends a disabling message to an associated device of the electronic device 100 in response to the detected first preset posture and the first operation. The associated device receives the disabling message, and the associated device disables N preset privacy information obtaining modules of the associated device in response to the disabling message, and N is a positive integer. In an implementation, the associated device enables a privacy mode in response to the disabling message, that is, disables all privacy information obtaining modules included in the privacy mode of the associated device.

The associated device is a device that can establish a communication connection to the electronic device 100 in a wired or wireless connection manner, and the associated device can share specified data of the electronic device 100. For example, the electronic device 100 is a mobile phone, and the associated device may be a smart watch, a tablet computer, or the like. In this way, by controlling a physical posture feature of the electronic device 100 and simple interaction with the electronic device 100, the user can control the electronic device 100 and the all privacy information obtaining modules of the associated device of the device. It should be noted that the M privacy information obtaining modules disabled by the electronic device 100 and the N privacy information obtaining modules disabled by the associated device may be completely the same or may not be exactly the same. This is not specifically limited herein. In an implementation, the associated device disables a module that is of the associated device and that is in the M privacy information obtaining modules, that is, the M privacy information obtaining modules include the N privacy information obtaining modules.

The following describes the first preset posture in embodiments of this application.

In some embodiments, the electronic device 100 is provided with a foldable screen, and the foldable screen may be folded into a screen A (namely, a first screen) and a screen B (namely, a second screen) along a folding edge. The electronic device 100 detects, based on at least one of a first included angle between the screen A and the screen B, an included angle between the screen A and a horizontal plane, an included angle between the screen B and the horizontal plane, an included angle between an orientation of the screen A and a Z axis of a geographic coordinate system, and an included angle between an orientation of the screen B and the Z axis of the geographic coordinate system, that the electronic device 100 is in the first preset posture, and the first included angle falls within a first preset range.

In an implementation, the electronic device 100 is provided with the foldable screen, and the first preset posture is specifically that the screen A and the screen B are in a forward folded form, and the first preset range is [0°, P1]. For example, for the first preset posture, refer to the postures/the posture of the electronic device 100 shown in FIG. 2D and/or FIG. 4B.

In an implementation, the electronic device 100 is provided with the foldable screen, and the first preset posture is specifically that the screen A and the screen B are in the forward folded form, the included angle $\beta2$ between the screen B and the horizontal plane falls within a preset range 11 (namely, [0, f1], for example, f1 = 10°), an included angle $\beta5$ between a vector $\vec{z2}$ corresponding to the screen B and the Z axis of the geographic coordinate system is less than 90°, and the first preset range is [0°, P1]. It may be understood that the user placing the electronic device 100 in the first preset posture may mean that the user folds the electronic device 100 forward and then horizontally places the electronic device 100, and a back surface of the screen A is upward, and a back surface of the screen B is downward.

In an implementation, the electronic device 100 is provided with the foldable screen, and the first preset posture is specifically that the screen A and the screen B are in a reverse folded form, and the first preset range is [P4, 360°]. For example, for the first preset posture, refer to the posture of the electronic device 100 shown in FIG. 2F.

In an implementation, the electronic device 100 is provided with the foldable screen, and the first preset posture is specifically that the screen A and the screen B are in the reverse folded form, the included angle $\beta1$ between the screen A and the horizontal plane falls within the preset range 11, the included angle $\beta3$ between a vector $\vec{z2}$ corresponding to the screen A and the Z axis of the geographic coordinate system is greater than 90°, and the first preset range is [P4, 360°]. It may be understood that the user placing the electronic device 100 in the first preset posture may mean that the user folds the electronic device 100 reversely and then horizontally places the electronic device 100, and the screen B is upward, and the screen A is downward.

In an implementation, the electronic device 100 is provided with the foldable screen. The first preset posture is the first support state, and the first preset range is [f2, f3]; the first preset posture is the second support state, and the first preset range is [f4, f5]; the first preset posture is the third support state, and the first preset range is [f6, f7]; the first preset posture is the fourth support state, and the first preset range is [f8, f9]; the first preset posture is the fifth support state, and the first preset range is [f11, f12]; or the first preset posture is the sixth support state, and the first preset range is [f13, f14]. For example, for the first support state to the sixth support state, refer to the postures of the electronic device 100 shown in FIG. 8A to FIG. 8F.

In some embodiments, the electronic device 100 is provided with a double-sided screen, and the first preset posture is specifically that an included angle between the electronic device 100 and the horizontal plane falls within the preset range 11, and the included angle between the vector corresponding to the screen B and the Z axis of the geographic coordinate system is less than 90°. It may be understood that the user placing the electronic device 100 in the first preset posture may mean that the user horizontally places the electronic device 100 in which the double-sided screen is disposed, and the screen B is upward, and the screen A is downward.

In addition to the implementation of the first preset posture, in embodiments of this application, the first preset posture may further be another specified posture of the electronic device 100. This is not specifically limited herein. For example, the first preset posture may alternatively be the forward half-folded form or the reverse half-folded form.

**The following describes the first operation in embodiments of this application.**

In some embodiments, the first operation includes at least one of the following operations: an operation of switching the electronic device 100 from the first preset posture to a fourth preset posture, where the first preset posture is different from the fourth preset posture; an operation of switching the electronic device 100 from the first preset posture to the fourth preset posture, and then switching back to the first preset posture; an input operation performed on one or more preset function buttons of the electronic device 100; an operation of performing a preset gesture, where a first camera of the electronic device 100 is configured to detect, when the electronic device 100 is in the first preset posture, whether the preset gesture is received, and the first camera is visible to the user in the first preset posture; and an input operation performed on a virtual control displayed on a first preset display, where the first preset display of the electronic device 100 is visible to the user in the first preset posture.

In some embodiments, the first operation may include the input operation performed on the one or more preset function buttons. For example, the first operation is pressing or touching and holding a function button 1, or the first operation is simultaneously pressing the function button 1 and a function button 2. The function button of the electronic device 100 includes one or more of a power button, a volume up button, a volume down button, or a voice assistant button.

In some embodiments, the first operation includes a non-contact preset gesture, and the electronic device 100 may detect the first operation by using the camera. The preset gesture is not specifically limited in embodiments of this application.

In an implementation, when detecting that the electronic device 100 is in the first preset posture, the electronic device 100 starts a low-power-consumption camera 1 corresponding to the first preset posture to detect whether a gesture of the user is the preset gesture. In an implementation, when the electronic device 100 detects that the electronic device 100 is in the first preset posture, and the first included angle between the screen A and the screen B does not change within preset duration 1, the electronic device 100 starts the low-power-consumption camera 1 corresponding to the first preset posture to detect whether the gesture of the user is the preset gesture. For example, if the first preset posture is the posture of the electronic device 100 shown in FIG. 2D, FIG. 8A, FIG. 8D, or FIG. 8E, the low-power-consumption camera 1 may be a rear-facing low-power-consumption camera disposed for the electronic device 100. For example, if the first preset posture is the posture of the electronic device 100 shown in FIG. 2F, FIG. 8B, FIG. 8C, or FIG. 8F, the low-power-consumption camera 1 may be a front-facing low-power-consumption camera disposed for the electronic device 100. For example, the preset duration 1 is 2s.

In some embodiments, the first operation includes the input operation performed on the virtual control displayed on the display. In an implementation, when detecting that the electronic device 100 is in the first preset posture, the electronic device 100 displays a first control on a preset display 1 corresponding to the first preset posture. The first operation includes an input operation (for example, a touch operation) performed on the first control displayed on the display. In an implementation, when the electronic device detects that the electronic device 100 is in the first preset posture, and the first included angle between the screen A and the screen B does not change within the preset duration 1, the electronic device 100 displays the first control on the preset display 1 corresponding to the first preset posture.

The first preset display in embodiments of this application may be referred to as the preset display 1.

In some embodiments, a screen C is disposed on a back surface of the electronic device 100, and when the first preset posture is the posture of the electronic device 100 shown in FIG. 4B, FIG. 8A, FIG. 8D, or FIG. 8E, the preset display 1 may be the screen C, and the electronic device 100 receives, by using the screen C, the first operation performed by the user on the first control. In some embodiments, when the first preset posture is the posture of the electronic device 100 shown in FIG. 2F, FIG. 8B, FIG. 8C, or FIG. 8F, the preset display 1 may be the screen A, and the electronic device 100 receives, by using the screen A, the first operation performed by the user on the first control. In some embodiments, when the first preset posture is the posture of the electronic device 100 shown in FIG. 8C or FIG. 8F, the preset display 1 may be the screen B, and the electronic device 100 receives, by using the screen B, the first operation performed by the user on the first control.

It should be noted that, if the first operation includes the input operation performed on the first control displayed on the display, in an implementation, after the electronic device 100 displays the first control, the user can trigger, in any posture of the electronic device 100 by using the first control, the electronic device 100 to disable the M preset privacy information obtaining modules, for example, enable the privacy mode. In another implementation, after the electronic device 100 displays the first control, the user can trigger, only in the first preset posture of the electronic device 100 by using the first control, the electronic device 100 to disable the M preset privacy information obtaining modules. This is not specifically limited in this application.

In an implementation, before the electronic device receives the first operation, the method further includes: The electronic device displays the first control on the first preset display when detecting that the electronic device is in the first preset posture, where the first preset display is visible to the user in the first preset posture; and that the electronic device receives the first operation when detecting that the electronic device is in the first preset posture includes: when the electronic device is in the first preset posture, receiving a third operation of switching the electronic device from the first preset posture to another posture; and receiving a fourth operation performed on the first control, where the first operation includes the third operation and the fourth operation.

In some embodiments, the first operation includes the operation of switching the electronic device 100 from the first preset posture to the fourth preset posture. In some embodiments, the first operation includes the operation of switching the electronic device 100 from the first preset posture to the fourth preset posture, and then switching back to the first preset posture. The fourth preset posture and the first preset posture are different postures. In a process of folding from the first preset posture into the fourth preset posture, the first included angle between the screen A and the screen B may remain unchanged, decrease, or increase. This is not specifically limited herein.

In some embodiments, the electronic device 100 is provided with the foldable screen, and the foldable screen may be folded into the screen A and the screen B along the folding edge. The electronic device 100 detects, based on at least one of the first included angle between the screen A and the screen B, the included angle between the screen A and the horizontal plane, the included angle between the screen B and the horizontal plane, the included angle between the orientation of the screen A and the Z axis of the geographic coordinate system, and the included angle between the orientation of the screen B and the Z axis of the geographic coordinate system, that the electronic device 100 is in the fourth preset posture, and the first included angle falls within a fourth preset range. For the fourth preset posture, refer to any one of the possible implementations of the first preset posture. For the fourth preset range corresponding to the fourth preset posture, refer to the related descriptions of the first preset range corresponding to the first preset posture. Details are not described herein again.

In addition to the implementation of the first operation, there may be another implementation for the first operation in embodiments of this application. This is not specifically limited herein.

In some embodiments, before the electronic device 100 receives the first operation of the user, the method further includes: When detecting that the electronic device 100 is in the first preset posture, the electronic device 100 displays an operation prompt 1 on the preset display 1 corresponding to the first preset posture, where the operation prompt 1 is used to prompt the user to perform the first operation for disabling the M privacy information obtaining modules. It may be understood that the user can perform the first operation based on the operation prompt 1. In an implementation, when the electronic device detects that the electronic device 100 is in the first preset posture, and the first included angle between the screen A and the screen B does not change within the preset duration 1, the electronic device 100 displays the operation prompt 1 on the preset display 1 corresponding to the first preset posture. In an implementation, if the first operation of the user is not received after the operation prompt 1 is displayed, displaying of the operation prompt 1 is stopped when the operation prompt 1 is displayed for preset duration 2. For example, the preset duration 2 is 3s. It should be noted that the virtual control 1 may also be considered as the operation prompt for performing the first operation.

In an implementation, the electronic device 100 displays the operation prompt 1 on the preset display 1 in a screen-off state when detecting that the electronic device 100 is in the first preset posture. In an implementation, when detecting that the electronic device 100 is in the first preset posture, if the preset display 1 of the electronic device 100 is in the screen-off state, the electronic device 100 turns on the preset display 1, and displays the operation prompt 1 on the preset display 1. It may be understood that displaying the operation prompt 1 in the screen-off state means that a display area in the preset display 1 other than an area in which the operation prompt 1 is located is in the screen-off state, namely, a power-off state.

It should be noted that a first operation prompt in this application may be the operation prompt 1.

In some embodiments, the electronic device 100 receives the first operation of the user after displaying the operation prompt 1 on the preset display 1 in the screen-off state. The first operation may include the operation of switching the electronic device 100 from the first preset posture to the another posture, and the input operation performed on the preset function button in the another posture, the preset gesture, or the input operation performed on the virtual control in the foregoing another posture. It may be understood that, after the operation prompt 1 is displayed, the user can trigger, in the any posture by using the preset operation, the electronic device 100 to disable the M privacy information modules.

In an implementation, after the M preset privacy information obtaining modules are disabled, the electronic device 100 further displays a disabling prompt on the preset display 1, where the disabling prompt is used to prompt the user that the M privacy information obtaining modules are disabled.

The following describes the operation prompt 1 and the first operation by using an example in which the first preset posture is the forward folded form shown in FIG. 4B, the preset display 1 is the screen C, and the first operation is used to enable the privacy mode (that is, disable the privacy information obtaining module included in the privacy mode).

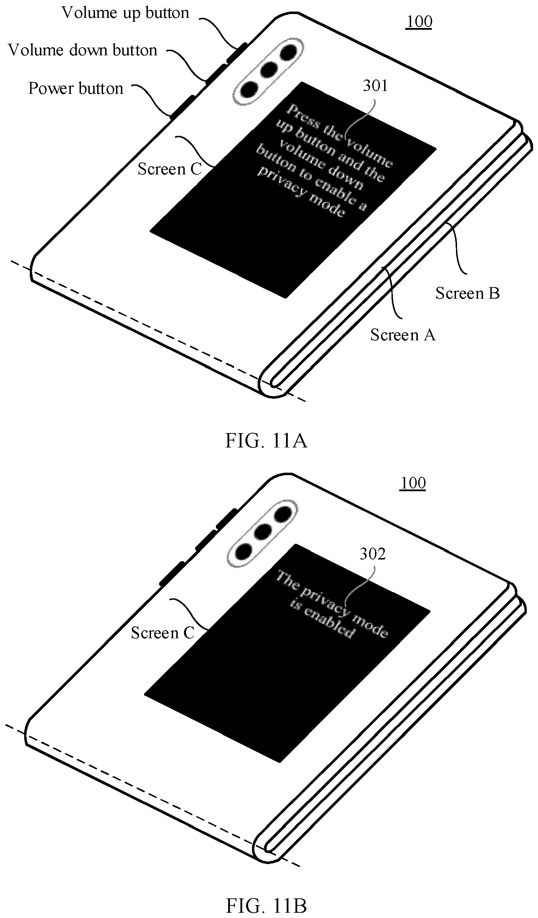

For example, the first operation is simultaneously pressing a volume up button and a volume down button. When the electronic device detects that the electronic device 100 is in the forward folded form, the electronic device 100 is horizontally placed, and the screen C is upward, the electronic device 100 displays an operation prompt 301 (namely, the operation prompt 1) shown in FIG. 11A in the screen-off state, and specific content of the operation prompt 301 may be "Press the volume up button and the volume down button to enable the privacy mode". The user simultaneously presses the volume up button and the volume down button based on the operation prompt 301, to enable the privacy mode of the electronic device 100. After enabling the privacy mode, the electronic device 100 may display a disabling prompt 302 shown in FIG. 11B, and specific content of the disabling prompt 302 may be "The privacy mode is enabled".

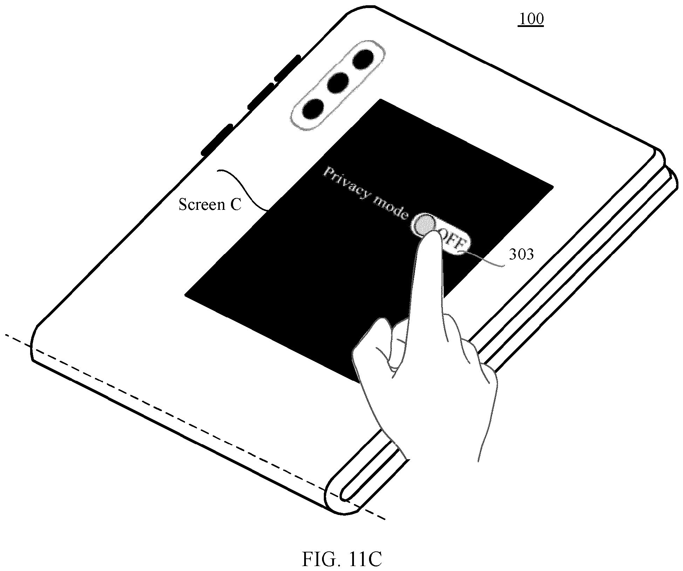

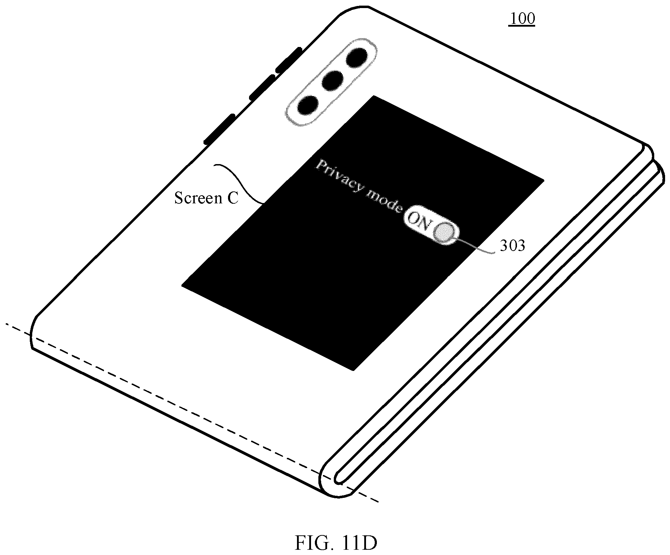

For example, the first operation is the input operation performed on the virtual control 1. When the electronic device detects that the electronic device 100 is in the forward folded form, the electronic device 100 is horizontally placed, and the screen C is upward, the electronic device 100 displays a switch control 303 (namely, the virtual control 1) of the privacy mode shown in FIG. 11C in the screen-off state. The switch control 303 is in an off (OFF) state. The switch control 303 may receive an input operation (for example, a touch operation) of the user. The electronic device 100 enables the privacy mode in response to the detected input operation. In an implementation, after the electronic device 100 enables the privacy mode, the electronic device 100 stops displaying the switch control 303. In another implementation, as shown in FIG. 11D, after the electronic device 100 enables the privacy mode, the electronic device 100 displays the switch control 303 in an on (ON) state. In this case, the switch control 303 is configured to prompt the user that the privacy mode is enabled.

In some embodiments, before the electronic device 100 receives the first operation of the user, the method further includes: The electronic device 100 displays a time setting control when detecting that the electronic device 100 is in the first preset posture, where the time setting control is configured to set disabling duration of the M preset privacy information obtaining modules, and the time setting control may receive first disabling duration set by the user. After the time setting control receives the first disabling duration input by the user, the electronic device 100 may receive the first operation performed by the user. In response to the detected first preset posture and the first operation, the electronic device 100 disables the M preset privacy information obtaining modules, and sets the disabling duration to the first disabling duration input by the user. After the first disabling duration set by the user expires, the electronic device 100 may automatically recover normal use of the M privacy information obtaining modules. In an implementation, the electronic device 100 displays the time setting control and the operation prompt 1 when detecting that the electronic device 100 is in the first preset posture. After setting the disabling duration, the user performs the first operation based on the operation prompt 1.

The following describes setting of the disabling duration by the user by using an example in which the first operation is the touch operation performed on the switch control 303, and the first operation is used to enable the privacy mode.

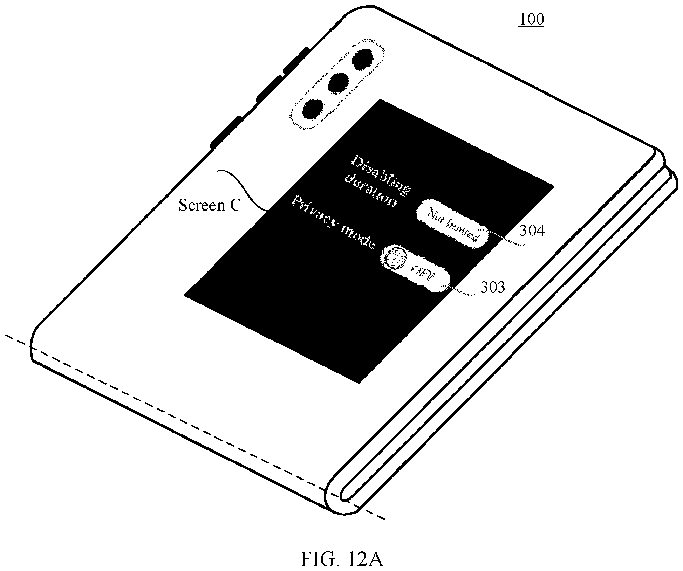

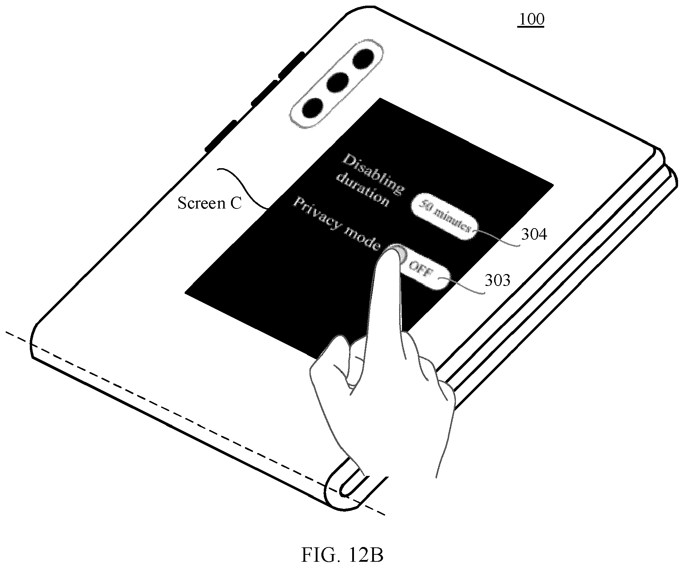

For example, the electronic device 100 displays a time setting control 304 and the switch control 303 (namely, the operation prompt 1) when detecting that the electronic device 100 is in the first preset posture shown in FIG. 12A. Initially displayed content "Not limited" of the time setting control 304 indicates that an initial value of the disabling duration is infinite. If the user does not input another value in the time setting control 304, after the user taps the switch control 303, the electronic device 100 enables the privacy mode, and sets the disabling duration of the privacy information obtaining module in the privacy mode to infinite until the user manually disables the privacy mode. Then, the electronic device 100 recovers the normal use of the privacy information obtaining module in the privacy mode. Refer to FIG. 12B. The time setting control 304 may also receive 50 minutes input by the user. Then, after the user taps the switch control 303, the electronic device 100 enables the privacy mode, and sets the disabling duration of the privacy information obtaining module in the privacy mode to 50 minutes.

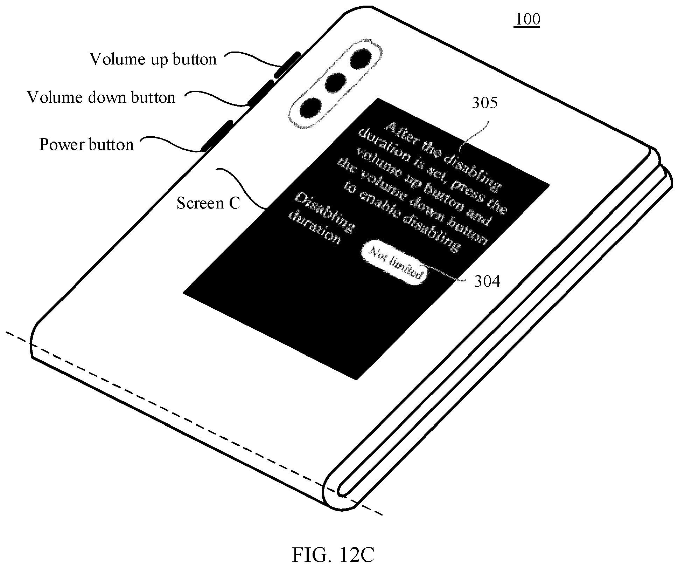

For example, the electronic device 100 displays the time setting control 304 and an operation prompt 305 (namely, the operation prompt 1) when detecting that the electronic device 100 is in the first preset posture shown in FIG. 12C. Specific content of the operation prompt 305 may be "After the disabling duration is set, press the volume up button and the volume down button to enable disabling".

In some embodiments, before the electronic device 100 receives the first operation of the user, the method further includes: When detecting that the electronic device 100 is in the first preset posture, the electronic device 100 displays selection controls respectively corresponding to a plurality of privacy information obtaining modules, for example, a first selection control corresponding to a first privacy information obtaining module and a second selection control corresponding to a second privacy information obtaining module, where the selection control may receive a selection operation of the user. The user may select at least one of the plurality of selection controls. If the user selects the first selection control, but does not select the second selection control, in response to the detected first preset posture and the first operation, the electronic device 100 disables the first privacy information obtaining module corresponding to the first selection control, but does not disable the second privacy information obtaining module corresponding to the second selection control. In an implementation, when detecting that the electronic device 100 is in the first preset posture, the electronic device 100 displays the operation prompt 1 and the selection controls respectively corresponding to the plurality of privacy information obtaining modules. After selecting the at least one of the plurality of selection controls, the user performs the first operation based on the operation prompt 1.

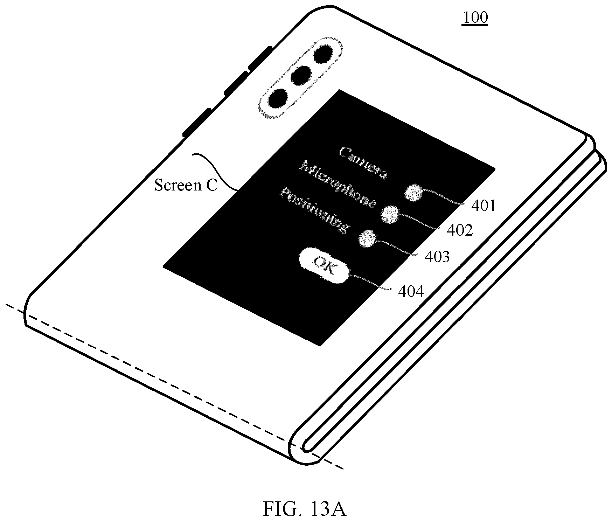

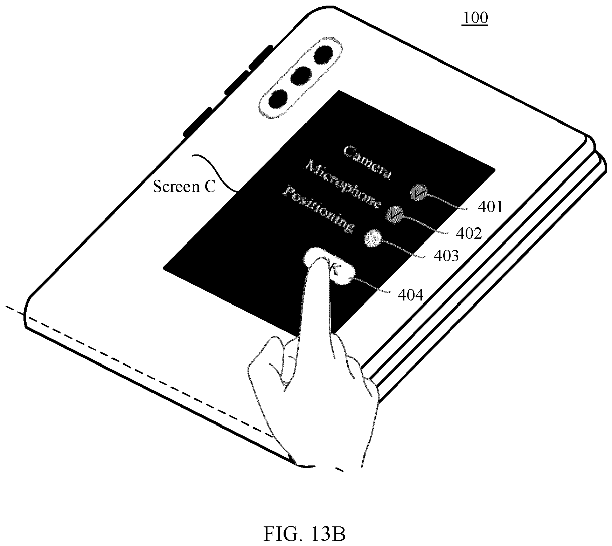

For example, when detecting that the electronic device 100 is in the first preset posture shown in FIG. 13A, the electronic device 100 displays a selection control 401 corresponding to a camera, a selection control 402 corresponding to a microphone, a selection control 403 corresponding to a positioning module, and an OK control 404 (namely, the operation prompt 1). Refer to FIG. 13B. After the user selects the selection control 304 and the selection control 305, the OK control 404 may receive the first operation of the user, and the electronic device 100 disables the camera and the microphone in response to the detected first preset gesture and the first operation.

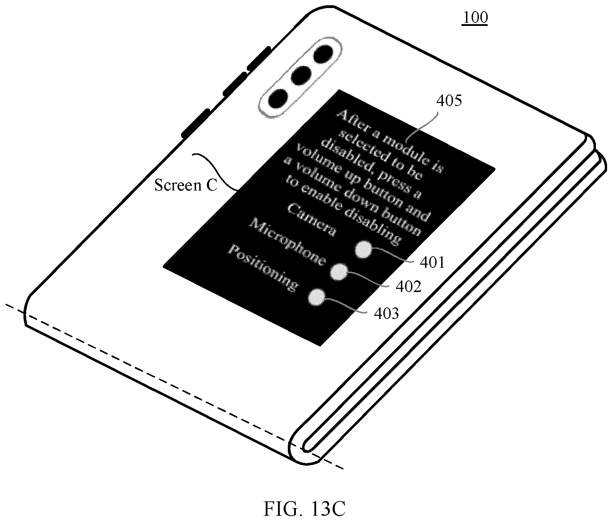

For example, when detecting that the electronic device 100 is in the first preset posture, the electronic device 100 displays the selection control 401 corresponding to the camera, the selection control 402 corresponding to the microphone, the selection control 403 corresponding to the positioning module, and an operation prompt 405 that are shown in FIG. 13C. Specific content of the operation prompt 405 may be "After the module is selected to be disabled, press the volume up button and the volume down button to enable disabling".

In some embodiments, before the electronic device 100 receives the first operation of the user, the method further includes: When detecting that the electronic device 100 is in the first preset posture, the electronic device 100 displays the selection controls (for example, a selection control 1 corresponding to a privacy information obtaining module 1) respectively corresponding to the plurality of privacy information obtaining modules, the time setting control, and the operation prompt 1, where the selection control 1 receives a selection operation (for example, a touch operation) of the user, and the time setting control receives the first disabling duration input by the user. Then, the user performs the first operation based on the operation prompt 1. In response to the detected first preset gesture and the first operation, the electronic device 100 disables the privacy information obtaining module 1 corresponding to the selection control 1, and sets disabling duration of the module to the first disabling duration.

In some embodiments, in step S102, the electronic device 100 disables the privacy information obtaining module 1 in response to the detected first preset posture and the first operation. After step S102, the method further includes: When detecting that the electronic device 100 is in a second preset posture, the electronic device 100 receives a fifth operation of the user; and disables a privacy information obtaining module 2 in response to the detected second preset posture and the fifth operation. The first preset posture and the second preset posture are different postures of the electronic device 100. The fifth operation and the first operation may be a same input operation, or may be different input operations. This is not specifically limited herein. For example, both the fifth operation and the first operation are simultaneously pressing the function button 1 and the function button 2. For example, the first operation is pressing the function button 1, and the fifth operation is pressing the function button 2. For example, the first operation is simultaneously pressing the function button 1 and the function button 2, and the fifth operation is the preset gesture.

In some embodiments, the electronic device 100 is provided with the foldable screen, and the foldable screen may be folded into the screen A and the screen B along the folding edge. The electronic device 100 detects, based on at least one of the first included angle between the screen A and the screen B, the included angle between the screen A and the horizontal plane, the included angle between the screen B and the horizontal plane, the included angle between the orientation of the screen A and the Z axis of the geographic coordinate system, and the included angle between the orientation of the screen B and the Z axis of the geographic coordinate system, that the electronic device 100 is in the second preset posture, and the first included angle falls within a second preset range.

In some embodiments, after step S102, the method further includes: When detecting that the electronic device 100 is in the second preset posture, the electronic device 100 displays an operation prompt 2 on a preset display 2 corresponding to the second preset posture, where the operation prompt 2 is used to prompt the user to perform the fifth operation for disabling the privacy information obtaining module 2. In some embodiments, after step S 102, the method further includes: When the electronic device 100 detects that the electronic device 100 is in the second preset posture, and the first included angle between the screen A and the screen B does not change within the preset duration, the electronic device 100 displays the operation prompt 2 on the preset display 2 corresponding to the second preset posture. The user performs the fifth operation based on the operation prompt 2.

It should be noted that for the second preset posture, refer to any one of the possible implementations of the first preset posture. For example, the second preset posture may be the forward folded form, the reverse folded form, the first support state, or the like. Correspondingly, for the second preset range of the first included angle corresponding to the second preset posture, refer to the related description of the first preset range of the first included angle corresponding to the first preset posture. For the preset display 2 corresponding to the second preset posture, refer to the related description of the preset display 1 corresponding to the first preset posture. The preset display 2 and the preset display 1 may be the same or may be different. For the fifth operation, refer to any one of the possible implementations of the first operation. Details are not described herein again.

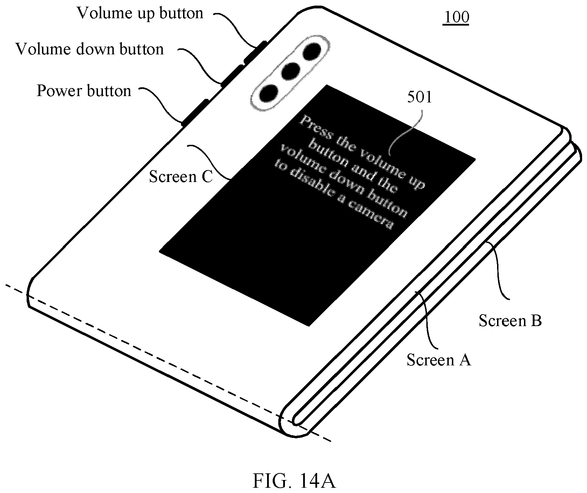

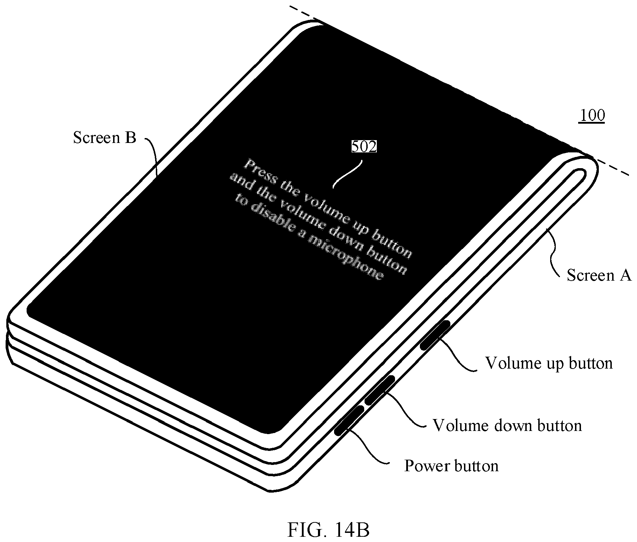

For example, the first preset posture is a posture of the electronic device 100 shown in FIG. 14A, a first included angle range corresponding to the first preset posture is [0°, P1], the preset display 1 corresponding to the first preset posture is the screen C, and the first operation is simultaneously pressing the volume up button and a power button. The second preset posture is a posture of the electronic device 100 shown in FIG. 14B, a first included angle range corresponding to the second preset posture is [P4, 360°], the preset display 2 corresponding to the second preset posture is the screen B, and the fifth operation is also simultaneously pressing the volume up button and the power button. The electronic device 100 displays an operation prompt 501 on the screen C when detecting that the electronic device 100 is in the first preset posture shown in FIG. 14A, the user simultaneously presses the volume up button and the volume down button based on the operation prompt 501, and the electronic device 100 disables the camera in response to the detected first preset posture and the input operation. The electronic device 100 displays an operation prompt 502 on the screen B when detecting that the electronic device 100 is in the second preset posture shown in FIG. 14B, the user simultaneously presses the volume up button and the volume down button based on the operation prompt 502, and the electronic device 100 disables the microphone in response to the detected second preset posture and the input operation.

In an implementation, a correspondence between a preset posture and a privacy information obtaining module disabled by the preset posture may be set by the electronic device 100 by default. The correspondence may be displayed in system settings, to indicate the user how to respectively disable each privacy information obtaining module. In an implementation, the user may modify correspondences between various preset postures and privacy information obtaining modules, so that the user selects a preset posture required for disabling a privacy information obtaining module. There may be a one-to-one or one-to-many correspondence between the preset posture and the privacy information obtaining module.

This is not specifically limited herein.

In some embodiments, the electronic device 100 disables the privacy information obtaining module 1 in response to the detected first preset posture and the first operation; the electronic device 100 receives a sixth operation of the user when detecting that the electronic device 100 is in the first preset posture; and disables the privacy information obtaining module 2 in response to the detected first preset posture and the sixth operation. The sixth operation and the first operation are different input operations.

In some embodiments, before the first operation or the sixth operation of the user is received, the method further includes: displaying an operation prompt 3 when it is detected that the electronic device 100 is in the first preset posture, where the operation prompt 3 is used to prompt the user that the first operation may disable the privacy information obtaining module 1, and the sixth operation may disable the privacy information obtaining module 2.

It should be noted that a second operation prompt in this application may be the operation prompt 3.

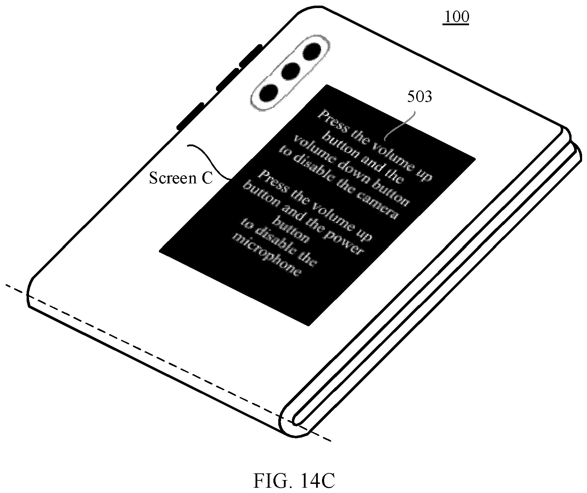

For example, the electronic device 100 displays an operation prompt 503 when detecting that the electronic device 100 is in the first preset posture shown in FIG. 14C. Specific content of the operation prompt 503 may be "Press the volume up button and the volume down button to disable the camera; and press the volume up button and the power button to disable the microphone". The user may choose to disable the camera or the microphone based on the operation prompt 503.

In an implementation, a correspondence between an input operation and a privacy information obtaining module disabled by the input operation may be set by the electronic device 100 by default. The correspondence may be displayed in the system settings, to indicate the user how to respectively disable each privacy information obtaining module. In an implementation, the user may modify correspondences between various input operations and privacy information obtaining modules, so that the user selects an input operation required for disabling a privacy information obtaining module. There may be a one-to-one or one-to-many correspondence between the input operation and the privacy information obtaining module. This is not specifically limited herein.

S103: Receive a second operation of the user.

S104: Recover normal use of the M privacy information obtaining modules in response to the detected second operation.

In some embodiments, in step S102, the privacy mode is enabled in response to the detected first preset posture and the first operation. In step S104, the privacy mode is disabled in response to the detected second operation, that is, the normal use of the privacy information obtaining modules included in the privacy mode is recovered.

For the second operation, refer to any one of the possible implementations of the first operation. The second operation may be the input operation performed on the function button, the preset gesture, an input operation performed on a virtual control 2 displayed on a preset display 3, or the like. It should be noted that if the camera is disabled, the second operation cannot be the preset gesture.

In some embodiments, after the user disables the M privacy information obtaining modules, a disabling prompt 1 is displayed. In an implementation, the disabling prompt 1 may be presented as the virtual control displayed on the preset display 1. The disabling prompt 1 may further receive the second operation (for example, a touch operation) of the user. The electronic device 100 recovers the normal use of the M privacy information obtaining modules in response to the detected second operation.

For example, refer to FIG. 11D. The disabling prompt 1 is presented as the switch control 303 in the on (ON) state. The switch control 303 may receive an input operation (for example, a touch operation) of the user, and the electronic device 100 disables the privacy mode in response to the detected input operation.

In some embodiments, step S 103 specifically includes: receiving the second operation of the user when it is detected that the electronic device 100 is in a third preset posture. Step S 104 specifically includes: The electronic device 100 recovers the normal use of the M privacy information obtaining modules in response to the detected third preset posture and the second operation.

In some embodiments, the electronic device 100 is provided with the foldable screen, and the foldable screen may be folded into the screen A and the screen B along the folding edge. The electronic device 100 detects, based on at least one of the first included angle between the screen A and the screen B, the included angle between the screen A and the horizontal plane, the included angle between the screen B and the horizontal plane, the included angle between the orientation of the screen A and the Z axis of the geographic coordinate system, and the included angle between the orientation of the screen B and the Z axis of the geographic coordinate system, that the electronic device 100 is in the third preset posture, and the first included angle falls within a third preset range.

In some embodiments, before the second operation of the user is received, the method further includes: When detecting that the electronic device 100 is in the third preset posture, the electronic device 100 displays an operation prompt 4 on the preset display 3 corresponding to the third preset posture, where the operation prompt 4 indicates the second operation for recovering the disabled privacy information obtaining module. The user performs the second operation based on the operation prompt 4. In some embodiments, before the second operation of the user is received, the method further includes: When the electronic device 100 detects that the electronic device 100 is in the third preset posture, and the first included angle between the screen A and the screen B does not change within the preset duration, the electronic device 100 displays the operation prompt 4 on the preset display 3 corresponding to the third preset posture. The third preset posture and the first preset posture are different postures. The second operation and the first operation may be a same input operation, or may be different input operations.

It should be noted that for the third preset posture, refer to any one of the possible implementations of the first preset posture. For example, the third preset posture may be the forward folded form, the reverse folded form, the first support state, or the like. Correspondingly, for the third preset range of the first included angle corresponding to the third preset posture, refer to the related description of the first preset range of the first included angle corresponding to the first preset posture. For the preset display 3 corresponding to the third preset posture, refer to the related description of the preset display 1 corresponding to the first preset posture. The preset display 2 and the preset display 1 may be the same or may be different. Details are not described herein again.

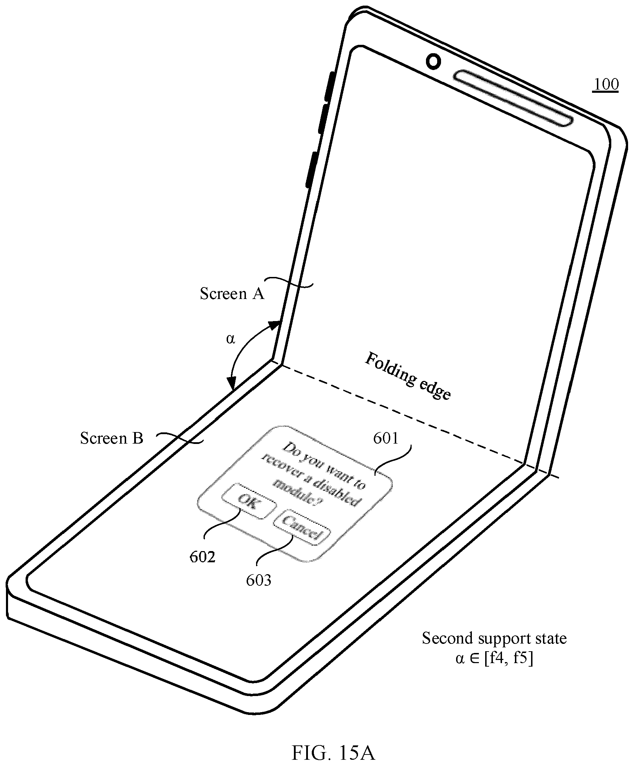

For example, the third preset posture is the second support state shown in FIG. 15A, the third preset range is [f4, f5], and the preset display 3 corresponding to the third preset posture is the screen B. Refer to FIG. 15A. The electronic device 100 displays a selection box 601 (namely, the operation prompt 4) on the screen B when detecting that the electronic device 100 is in the second support state. The selection box 601 includes an OK control 602 and a cancel control 603. The OK control 602 may receive the second operation (for example, a touch operation) of the user. The electronic device 100 may recover the disabled privacy information obtaining module in response to the second operation. The cancel control 602 may receive an input operation of the user, and the electronic device 100 may stop displaying the selection box 601 in response to the input operation.

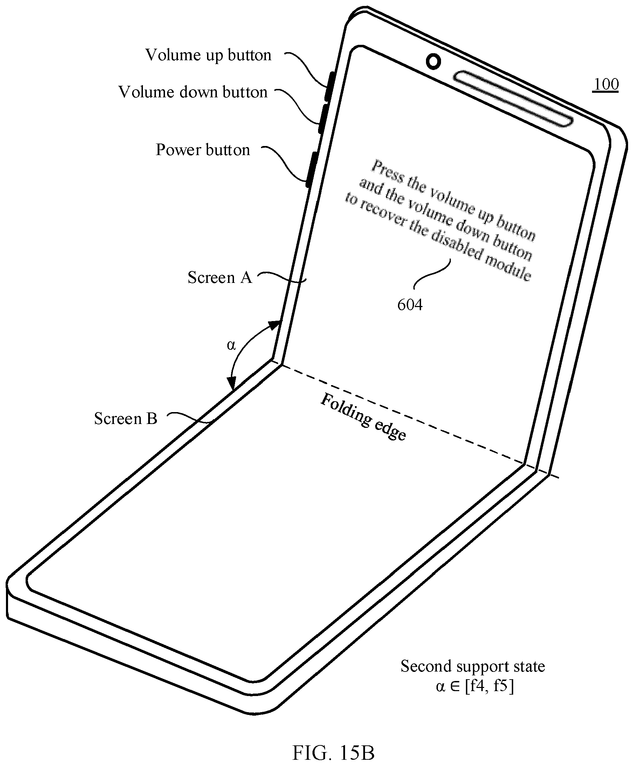

For example, the third preset posture is the second support state shown in FIG. 15B, the third preset range is [f4, f5], and the preset display 3 corresponding to the third preset posture is the screen A. Refer to FIG. 15A. The electronic device 100 displays an operation prompt 604 on the screen A when detecting that the electronic device 100 is in the second support state. Specific content of the operation prompt 604 may be "Press the volume up button and the volume down button to recover the disabled module".

**The following describes a software structure of the electronic device 100 by using an example.**

A software system of the electronic device 100 may use a layered architecture, an event-driven architecture, a microkernel architecture, a micro service architecture, or a cloud architecture. In embodiments of the present invention, an Android system of a layered architecture is used as an example to describe the software structure of the electronic device 100.

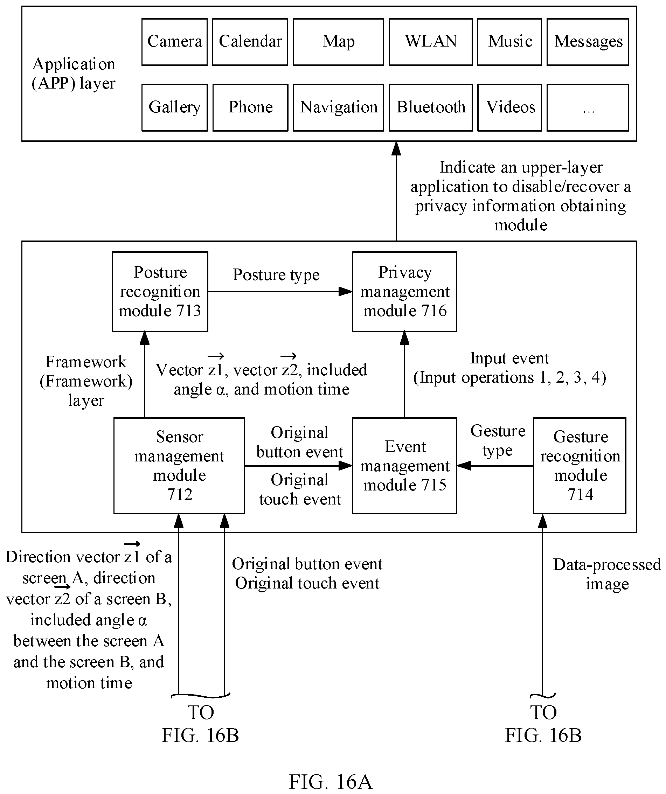

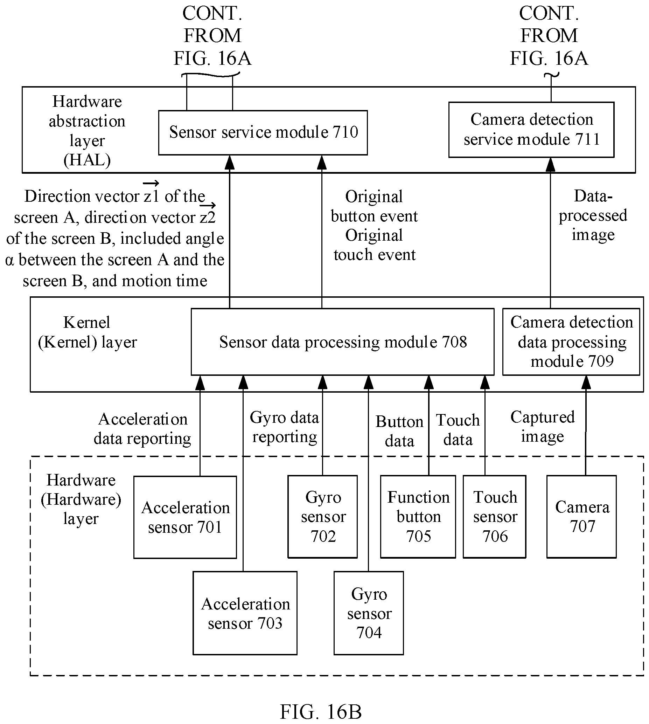

FIG. 16A and FIG. 16B are a block diagram of a software structure of an electronic device 100 according to an embodiment of this application.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application (application, APP) layer may include a series of application packages. As shown in FIG. 16A and FIG. 16B, the application packages may include applications such as Camera, Gallery, Calendar, Phone, Map, Navigation, WLAN, Bluetooth, Music, Videos, and Messages.

The application framework (Framework) layer provides an application programming interface (application programming interface, API) and a programming framework for an application at the application layer. The application framework layer includes some predefined functions. As shown in FIG. 16A and FIG. 16B, the framework layer may include a sensor management module (sensor manager) 712, a posture recognition (posture recognition) module 713, a gesture recognition module (display manager) 714, an event management module (window manager service, WMS) 715, and a privacy management module (window manager service, WMS) 716. Optionally, the framework layer may further include an activity manager (activity manager service, AMS), a content provider, a view system, a phone manager, a resource manager, a notification manager, and the like (not shown in the accompanying drawing).

The window manager is configured to manage a window program. The window manager may obtain a size of a display, determine whether there is a status bar, perform screen locking, take a screenshot, and the like.

A hardware abstraction layer (hardware abstraction layer, HAL) includes a sensor service (sensor service) module 710. The sensor service module 710 may be configured to report a processing result of a sensor data processing module 708 at the kernel layer to the sensor management module 712 at the framework layer. In some embodiments, the hardware abstraction layer further includes a camera detection service module 711. The camera detection service module 711 may be configured to report an image processing result of a camera detection data processing module 709 at the kernel layer to the gesture recognition module 714 at the framework layer.

The kernel (Kernel) layer is a layer between hardware and software. The kernel layer may include the sensor data processing module 708. The sensor data processing module 708 may be configured to: obtain data reported by one or more sensors at a hardware (Hardware) layer, perform data processing, and report a data processing result to the sensor service module 710. In some embodiments, the kernel layer may further include the camera detection data processing module 709. The camera detection data processing module 709 may be configured to: obtain an image reported by a camera 707 at the hardware layer, perform image processing, and report an image processing result to the camera detection service module 711.

The hardware layer may include an acceleration sensor 701, a gyro sensor 702, an acceleration sensor 703, a gyro sensor 704, and the like. The acceleration sensor 701 and the gyro sensor 702 may be disposed on a screen A of the electronic device 100, and the acceleration sensor 703 and the gyro sensor 704 may be disposed on a screen B of the electronic device 100. The acceleration sensor 701 may be configured to: measure acceleration data of the screen A, and report the acceleration data to the sensor data processing module 708. The acceleration sensor 703 may be configured to: measure acceleration data of the screen B, and report the acceleration data to the sensor data processing module 708. The gyro sensor 702 may be configured to: measure gyro data of the screen A, and report the gyro data to the sensor data processing module 708. The gyro sensor 704 may be configured to: measure gyro data of the screen B, and report the gyro data to the sensor data processing module 708.

The hardware layer may further include a function button 705 (for example, a volume up button, a volume down button, or a power button), and a touch sensor 706 disposed on the display. The function button 705 may obtain button data of pressing the function button 705 by a user (for example, a press type, press duration, or a press moment) and report the button data to the sensor data processing module 708. The touch sensor 706 may obtain touch data (for example, touch coordinates or touch time) of the user touching the display, and report the touch data to the sensor data processing module 708.

When the user folds (for example, performs a folding operation on a foldable screen) the electronic device 100, the acceleration sensor 701, the gyro sensor 702, the acceleration sensor 703, and the gyro sensor 704 at the hardware layer may report sensor data measured by the acceleration sensor 701, the gyro sensor 702, the acceleration sensor 703, and the gyro sensor 704 to the sensor data processing module 708 at the kernel layer. The sensor data processing module 708 may calculate, based on the sensor data reported by the plurality of sensors at the hardware layer, a vector $\vec{z1}$ corresponding to an orientation of the screen A and a vector $\vec{z2}$ corresponding to an orientation of the screen B, and further calculate a first included angle between the screen A and the screen B. Then, the sensor data processing module 708 may report the direction vector $\vec{z1}$ of the orientation of the screen A, the direction vector $\vec{z2}$ of the orientation of the screen B, and the first included angle between the screen A and the screen B to the sensor management module 712 at the framework layer by using the sensor service module 710 at the hardware abstraction layer. The sensor management module 712 may be configured to provide the vector $\vec{z1}$, the vector $\vec{z2}$, and the first included angle to the posture recognition module 713. The posture recognition module 713 may recognize a posture type of the electronic device 100 based on the vector $\vec{z1}$, the vector $\vec{z2}$, and the first included angle, and send the posture type to the privacy management module 716. In addition, after the user folds the electronic device 100 to a preset posture, the user performs a preset input operation (for example, a first operation, a fifth operation, a sixth operation, or a second operation). The function button 705 and the touch sensor 706 may upload collected data of the preset input operation to the sensor data processing module 708. The sensor data processing module 708 may determine an original event of the preset input operation based on the data uploaded by the function button 705 or the touch sensor 706, and upload the original event to the sensor management module 712 by using the sensor service module 710. The event management module 715 may obtain an original button event and an original touch event from the sensor management module 712, or may obtain a gesture type of the user from the gesture recognition module 714. Based on the original button event, the original touch event, and/or the gesture type, the event management module 715 may determine the preset input operation of the user, and send the preset input operation to the privacy management module 716. The privacy management module 716 may obtain a correspondence between the posture type and a privacy information obtaining module and a correspondence between the preset input operation and a privacy information obtaining module. The privacy management module 716 may determine, based on the posture type and the input operation of the user, to disable or recover M preset privacy information management modules, and indicate an upper-layer application to disable or recover the M privacy information management modules.

In some embodiments, when the posture type is a first preset gesture, and the input operation is a first operation, the privacy management module 716 determines to disable the M privacy information obtaining modules, for example, enable a privacy mode (that is, disable all privacy information obtaining modules included in the privacy mode). After disabling the M privacy information obtaining modules, when the posture type is a third preset posture and the input operation is a second operation, the privacy management module 716 determines to recover normal use of the M privacy information obtaining modules, for example, disable the privacy mode (that is, recover the all privacy information obtaining modules included in the privacy mode).

In some embodiments, when the posture type is a first preset posture, and the input operation is a first operation, the privacy management module 716 determines to disable a privacy information obtaining module 1. When the posture type is a second preset gesture, and the input operation is a fifth operation, the privacy management module 716 determines to disable a privacy information obtaining module 2. The first preset posture and the second preset posture are different postures. The first operation and the fifth operation may be the same or different. In some embodiments, when the posture type is the first preset posture, and the input operation is the first operation, the privacy management module 716 determines to disable the privacy information obtaining module 1. When the posture type is the first preset posture, and the input operation is a sixth operation, the privacy management module 716 determines to disable the privacy information obtaining module 2. The first operation is different from the sixth operation. After disabling the privacy information obtaining module 1 and/or the privacy information obtaining module 2, when the posture type is the third preset posture and the input operation is the second operation, the privacy management module 716 determines to recover the normal use of the all privacy information obtaining modules.

The application framework (Framework) layer further includes a display management module, and the posture recognition module 713 further sends the posture type to the display management module. In some embodiments, when determining that the posture type is the first preset posture, the display management module indicates the upper-layer application to display an operation prompt 1, where the operation prompt 1 is used to prompt the user to perform the first operation for disabling the privacy information management module. In some embodiments, when determining that the posture type is the third preset posture, the display management module indicates the upper-layer application to display an operation prompt 3, where the operation prompt 3 is used to prompt the user to perform the second operation for recovering the privacy information management module.

It may be understood that the software structure shown in this embodiment of the present invention does not constitute a specific limitation on the electronic device 100. In some other embodiments of this application, the software structure of the electronic device 100 may include more or fewer modules than those shown in the figure.

This application further provides an electronic device 100. The electronic device 100 includes a first screen and a second screen; the first screen and the second screen form a foldable screen of the electronic device, and the first screen and the second screen are respectively located on two sides of a folding edge of the foldable screen; or the first screen and the second screen form a double-sided screen of the electronic device, the first screen is disposed on a front surface of the electronic device, and the second screen is disposed on a back surface of the electronic device.

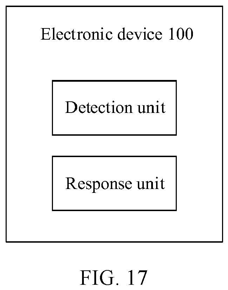

FIG. 17 is a schematic diagram of a structure of another electronic device according to an embodiment of the present invention. As shown in FIG. 17, an electronic device 100 may include a detection unit and a response unit.

The detection unit is configured to receive a first operation when detecting that the electronic device is in a first preset posture, where the first preset posture is determined based on a posture of the first screen and/or a posture of the second screen;

the response unit is configured to disable M preset privacy information obtaining modules in response to the detected first preset posture and the first operation, where M is a positive integer;
the detection unit is further configured to detect a second operation; and
the response unit is further configured to recover normal use of the M privacy information obtaining modules in response to the second operation.

In an implementation, the first preset posture is determined based on at least one of a first included angle between the first screen and the second screen, an included angle between the first screen and a horizontal plane, an included angle between the second screen and the horizontal plane, an included angle between an orientation of the first screen and a Z axis of a geographic coordinate system, and an included angle between an orientation of the second screen and the Z axis of the geographic coordinate system.

In an implementation, the response unit is specifically configured to: in response to the detected first preset posture and the first operation, enable a privacy mode of the electronic device, and disable the M privacy information obtaining modules indicated by the privacy mode of the electronic device.

In an implementation, the response unit is further configured to send a disabling message to an associated device of the electronic device in response to the detected first preset posture and the first operation, where the disabling message is used to prompt the associated device to disable N preset privacy information obtaining modules, and N is a positive integer.

In an implementation, the disabling message is used to prompt the associated device to enable a privacy mode, and disable the N privacy information obtaining modules indicated by the privacy mode of the associated device.

In an implementation, the detection unit is specifically configured to receive a second operation when detecting that the electronic device is in a third preset posture; and the response unit is specifically configured to recover the normal use of the M privacy information obtaining modules in response to the detected second preset posture and the second operation.

In an implementation, the first operation includes at least one of the following operations: an operation of switching the electronic device from the first preset posture to a fourth preset posture, where the first preset posture is different from the fourth preset posture; an operation of switching the electronic device from the first preset posture to the fourth preset posture, and then switching back to the first preset posture; an input operation performed on one or more preset function buttons; an operation of performing a preset gesture, where a first camera of the electronic device is configured to detect, when the electronic device is in the first preset posture, whether the preset gesture is received, and the first camera is visible to a user in the first preset posture; and an input operation performed on a virtual control displayed on a first preset display, where the first preset display is visible to a user in the first preset posture.

In an implementation, the electronic device further includes a display unit. Before the first operation is received, the display unit is configured to display a first operation prompt on the first preset display when it is detected that the electronic device is in the first preset posture; or display the first operation prompt on the first preset display when it is detected that the electronic device is in the first preset posture and the first included angle does not change within first preset duration, where the first operation prompt is used to prompt that the first operation is used to disable the M privacy information obtaining modules, and the first preset display is visible to the user in the first preset posture.

In an implementation, before the first operation is received, the display unit is further configured to display a first control on the first preset display when it is detected that the electronic device is in the first preset posture, where the first preset display is visible to the user in the first preset posture; and the detection unit is specifically configured to receive the first operation performed on the first control.

In an implementation, before the first operation is received, the display unit is further configured to display the first control on the first preset display when it is detected that the electronic device is in the first preset posture, where the first preset display is visible to the user in the first preset posture; and the detection unit is specifically configured to: when the electronic device is in the first preset posture, receive a third operation of switching the electronic device from the first preset posture to another posture; and receive a fourth operation performed on the first control, where the first operation includes the third operation and the fourth operation.

In an implementation, before the first operation is received, the display unit is further configured to display a time setting control when it is detected that the electronic device in the first preset posture; or display the time setting control when it is detected that the electronic device is in the first preset posture and the first included angle does not change within the first preset duration; and the time setting control receives first disabling duration set by the user; and the response unit is specifically configured to: in response to the detected first preset posture and the first operation, disable the M privacy information obtaining modules, and set disabling duration of the M privacy information obtaining modules to the first disabling duration, where the first disabling duration indicates that the normal use of the M privacy information obtaining modules is to be recovered if the second operation is not received within the first disabling duration within which the M privacy information obtaining modules are disabled.

In an implementation, before the first operation is received, the display unit is further configured to: when it is detected that the electronic device is in the first preset posture, display selection controls respectively corresponding to a plurality of privacy information obtaining modules, where the plurality of privacy information obtaining modules include a first privacy information obtaining module and a second privacy information obtaining module, the first privacy information obtaining module corresponds to a first selection control, and the second privacy information obtaining module corresponds to a second selection control; and if a selection operation performed on the first selection control is received, but a selection operation performed on the second selection control is not received, the M privacy information obtaining modules include the first privacy information obtaining module, and do not include the second privacy information obtaining module.

In an implementation, the detection unit is further configured to receive a fifth operation when detecting that the electronic device is in the second preset posture; and the response unit is further configured to disable K preset privacy information obtaining modules in response to the detected second preset posture and the fifth operation, where K is a positive integer, the M privacy information obtaining modules and the K privacy information obtaining modules are completely different or not exactly the same, and the first preset posture and the second preset posture are different postures.

In an implementation, the detection unit is further configured to receive a sixth operation when detecting that the electronic device is in the first preset posture; and the response unit is further configured to disable the K preset privacy information obtaining modules in response to the detected first preset posture and the sixth operation, where K is a positive integer, the M privacy information obtaining modules and the K privacy information obtaining modules are completely different or not exactly the same, and the first operation and the fifth operation are different operations.

In an implementation, before the first operation is received, the display unit is further configured to display a second operation prompt on the first preset display when it is detected that the electronic device is in the first preset posture; or display the second operation prompt on the first preset display when it is detected that the electronic device is in the first preset posture and the first included angle does not change within the first preset duration, where the second operation prompt is used to prompt that the first operation is used to disable the M privacy information obtaining modules, the fifth operation is used to disable the K privacy information obtaining modules, and the first preset display is visible to the user in the first preset posture.

In an implementation, the privacy information obtaining module of the electronic device includes one or more of the following: a camera, a microphone, a positioning module, a Wi-Fi module, a Bluetooth module, and a mobile data network module.

The implementations of this application may be randomly combined, to achieve different technical effect.

All or some of the foregoing embodiments may be implemented by using software, hardware, firmware, or any combination thereof. When software is used to implement embodiments, all or some embodiments may be implemented in a form of a computer program product. The computer program product includes one or more computer instructions. When the computer program instructions are loaded and executed on the computer, the procedures or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A person of ordinary skill in the art may understand that all or some of the processes of the methods in embodiments may be implemented by a computer program instructing related hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, or improvement made according to the disclosure of the present invention shall fall within the protection scope of the present invention.

**Claims**

1. A device control method, applied to an electronic device, wherein the electronic device comprises a first screen and a second screen; the first screen and the second screen form a foldable screen of the electronic device, and the first screen and the second screen are respectively located on two sides of a folding edge of the foldable screen; or the first screen and the second screen form a double-sided screen of the electronic device, the first screen is disposed on a front surface of the electronic device, and the second screen is disposed on a back surface of the electronic device; and the method comprises:

receiving, by the electronic device, a first operation when detecting that the electronic device is in a first preset posture, wherein the first preset posture is determined based on a posture of the first screen and/or a posture of the second screen;

disabling M preset privacy information obtaining modules in response to the detected first preset posture and the first operation, wherein M is a positive integer;

detecting a second operation; and

recovering normal use of the M privacy information obtaining modules in response to the second operation.

2. The method according to claim 1, wherein the first preset posture is determined by the electronic device based on at least one of a first included angle between the first screen and the second screen, an included angle between the first screen and a horizontal plane, an included angle between the second screen and the horizontal plane, an included angle between an orientation of the first screen and a Z axis of a geographic coordinate system, and an included angle between an orientation of the second screen and the Z axis of the geographic coordinate system.

3. The method according to claim 1, wherein the disabling M preset privacy information obtaining modules in response to the detected first preset posture and the first operation comprises:
in response to the detected first preset posture and the first operation, enabling a privacy mode of the electronic device, and disabling the M privacy information obtaining modules indicated by the privacy mode of the electronic device.

4. The method according to claim 1, wherein the method further comprises:
sending, by the electronic device, a disabling message to an associated device of the electronic device in response to the detected first preset posture and the first operation, wherein the disabling message is used to prompt the associated device to disable N preset privacy information obtaining modules, and N is a positive integer.

5. The method according to claim 4, wherein the disabling message is used to prompt the associated device to enable a privacy mode, and disable the N privacy information obtaining modules indicated by the privacy mode of the associated device.

6. The method according to claim 1, wherein the detecting a second operation comprises:

receiving, by the electronic device, the second operation when detecting that the electronic device is in a third preset posture; and
the recovering normal use of the M privacy information obtaining modules in response to the second operation comprises:
recovering the normal use of the M privacy information obtaining modules in response to the detected third preset posture and the second operation.

7. The method according to claim 1, wherein the first operation comprises at least one of the following operations:

an operation of switching the electronic device from the first preset posture to a fourth preset posture, wherein the first preset posture is different from the fourth preset posture;
an operation of switching the electronic device from the first preset posture to the fourth preset posture, and then switching back to the first preset posture;
an input operation performed on one or more preset function buttons;
an operation of performing a preset gesture, wherein a first camera of the electronic device is configured to detect, when the electronic device is in the first preset posture, whether the preset gesture is received, and the first camera is visible to a user in the first preset posture; and
an input operation performed on a virtual control displayed on a first preset display, wherein the first preset display is visible to the user in the first preset posture.

8. The method according to claim 1, wherein before the receiving, by the electronic device, a first operation, the method further comprises:

displaying, by the electronic device, a first operation prompt on a first preset display when detecting that the electronic device is in the first preset posture; or
displaying, by the electronic device, the first operation prompt on the first preset display when the electronic device detects that the electronic device is in the first preset posture and a first included angle does not change within first preset duration, wherein

the first operation prompt is used to prompt that the first operation is used to disable the M privacy information obtaining modules, and the first preset display is visible to a user in the first preset posture.

9. The method according to claim 1, wherein before the receiving, by the electronic device, a first operation, the method further comprises:

displaying, by the electronic device, a first control on a first preset display when detecting that the electronic device is in the first preset posture, wherein the first preset display is visible to a user in the first preset posture; and
the receiving, by the electronic device, a first operation when detecting that the electronic device is in a first preset posture comprises:
when detecting that the electronic device is in the first preset posture, receiving, by the electronic device, the first operation performed on the first control.

10. The method according to claim 1, wherein before the receiving, by the electronic device, a first operation, the method further comprises:

displaying, by the electronic device, a first control on a first preset display when detecting that the electronic device is in the first preset posture, wherein the first preset display is visible to a user in the first preset posture; and
the receiving, by the electronic device, a first operation when detecting that the electronic device is in a first preset posture comprises:

when the electronic device is in the first preset posture, receiving a third operation of switching the electronic device from the first preset posture to another posture; and
receiving a fourth operation performed on the first control, wherein the first operation comprises the third operation and the fourth operation.

11. The method according to claim 1, wherein before the receiving, by the electronic device, a first operation, the method further comprises:

displaying, by the electronic device, a time setting control when detecting that the electronic device is in the first preset posture; or
displaying, by the electronic device, the time setting control when the electronic device detects that the electronic device is in the first preset posture and a first included angle does not change within first preset duration; and
receiving, by the time setting control, first disabling duration set by a user; and
the disabling M preset privacy information obtaining modules in response to the detected first preset posture and the first operation comprises:

in response to the detected first preset posture and the first operation, disabling the M privacy information obtaining modules, and setting disabling duration of the M privacy information obtaining modules to the first disabling duration, wherein
the first disabling duration indicates the electronic device to recover the normal use of the M privacy information obtaining modules if the second operation is not received within the first disabling duration within which the M privacy information obtaining modules are disabled.

12. The method according to any one of claims 1 to 11, wherein before the receiving, by the electronic device, a first operation, the method further comprises:

when detecting that the electronic device is in the first preset posture, displaying, by the electronic device, selection controls respectively corresponding to a plurality of privacy information obtaining modules, wherein the plurality of privacy information obtaining modules comprise a first privacy information obtaining module and a second privacy information obtaining module, the first privacy information obtaining module corresponds to a first selection control, and the second privacy information obtaining module corresponds to a second selection control; and
if the electronic device receives, before receiving the first operation, a selection operation performed on the first selection control, but does not receive a selection operation performed on the second selection control, the M privacy information obtaining modules comprise the first privacy information obtaining module, and do not comprise the second privacy information obtaining module.

13. The method according to any one of claims 1 to 11, wherein the method further comprises:

receiving, by the electronic device, a fifth operation when detecting that the electronic device is in a second preset posture; and
disabling K preset privacy information obtaining modules in response to the detected second preset posture and the fifth operation, wherein K is a positive integer, the M privacy information obtaining modules and the K privacy information obtaining modules are completely different or not exactly the same, and the first preset posture and the second preset posture are different postures.

14. The method according to any one of claims 1 to 11, wherein the method further comprises:

receiving, by the electronic device, a sixth operation when detecting that the electronic device is in the first preset posture; and disabling K preset privacy information obtaining modules in response to the detected first preset posture and the sixth operation, wherein K is a positive integer, the M privacy information obtaining modules and the K privacy information obtaining modules are completely different or not exactly the same, and the first operation and the fifth operation are different operations.

15. The method according to claim 14, wherein before the receiving, by the electronic device, a first operation, the method further comprises:

displaying, by the electronic device, a second operation prompt on the first preset display when detecting that the electronic device is in the first preset posture; or
displaying, by the electronic device, the second operation prompt on the first preset display when the electronic device detects that the electronic device is in the first preset posture and the first included angle does not change within the first preset duration, wherein
the second operation prompt is used to prompt that the first operation is used to disable the M privacy information obtaining modules, the fifth operation is used to disable the K privacy information obtaining modules, and the first preset display is visible to the user in the first preset posture.

16. The method according to any one of claims 1 to 11, wherein the privacy information obtaining module of the electronic device comprises one or more of the following: a camera, a microphone, a positioning module, a Wi-Fi module, a Bluetooth module, and a mobile data network module.

17. An electronic device, comprising a memory, one or more processors, a plurality of applications, and one or more programs, wherein the one or more programs are stored in the memory, and when the one or more processors execute the one or more programs, the electronic device is enabled to implement the method according to any one of claims 1 to 16.

18. A computer-readable storage medium, comprising computer instructions, wherein when the computer instructions are run on an electronic device, the electronic device is enabled to perform the device control method according to any one of claims 1 to 16.

19. A computer program product, wherein when the computer program product runs on a computer, the computer is enabled to perform the device control method according to any one of claims 1 to 16.

Front-facing camera

Top edge

100

Folding edge

11a

11b

Expanded
form

Bottom edge

FIG. 1A

Front-facing camera

Screen A

α

11a

Folding
edge

11b

Forward
half-folded
form

Screen B

FIG. 1B

100

100

11a

Screen B

11b

Screen A

α

Rear-facing
camera

Folding edge

Forward half-folded form

FIG. 1C

Screen A

Screen B

100

Rear-facing
camera

Folding
edge

Forward folded form

FIG. 1D

22a

22b

Front-facing camera
100
Screen A

α

Screen B

Folding
edge

Reverse half-folded form

FIG. 1E

FIG. 1F

Front-facing camera

Top edge

100

33a

33b

Expanded form

Bottom edge

FIG. 2A

FIG. 2B

Forward half-folded form

FIG. 2C

100

Folding edge

Rear-facing camera

Screen B

Screen A

Forward folded form

FIG. 2D

Front-facing camera

44b

Screen C

Screen A

β

Folding
edge

Screen B

Reverse half-folded
form

44a

FIG. 2E

Reverse folded form

FIG. 2F

100

Screen B

Screen A

Rear-facing
camera

Folding edge

Screen C

Forward half-folded form

FIG. 3A

Screen A

Screen B

100

Rear-facing
camera

Folding edge

Screen C

Forward folded form

FIG. 3B

FIG. 3C

Screen C

100

Rear-facing camera

Screen B

Forward half-folded form

FIG. 4A

Folding edge

100

Screen C

Rear-facing camera

Screen B

Screen A

Forward folded form

FIG. 4B

Rear-facing camera

100

Screen C

Screen A

Folding edge

Screen B

Forward half-folded form

FIG. 4C

Electronic device 100

Antenna 1

Antenna 2

| Mobile communication module 2G/3G/4G/5G [150] | Wireless communication module BT/WLAN/GNSS/NFC/IR/FM [160] |

Speaker [170A]

Receiver [170B]

Audio module [170]

Microphone [170C]

Headset jack [170D]

Displays 1 to N [194]

Cameras 1 to N [193]

Indicator [192]

Motor [191]

Button [190]

Internal memory [121]

SIM card interfaces 1 to N [195]

External memory interface [120]

Processor [110]

USB port [130]

Charging input

Charging management module [140]

Power management module [141]

Battery [142]

Sensor module [180]

Pressure sensor [180A]

Gyro sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

FIG. 5

Y

Z

N

X

North pole

O

E

FIG. 6A

South pole

$\theta$

Screen B

Vector $\overrightarrow{z2}$

Vector $\overrightarrow{z1}$

$\alpha$

Screen A

$\theta$

FIG. 6B

FIG. 7A

FIG. 7B

EP 4 386 606 A1

100

180° − α

Screen B

Screen A

Fourth support state α ∈ [f8, f9]

FIG. 8B

100

Rear-facing camera

Screen C

Screen A

Screen B

α

First support state α ∈ [f2, f3]

FIG. 8A

Front-facing camera

Screen A

100

α

Folding edge

Screen B

Second support state α ∈ [f4, f5]

FIG. 8C

Rear-facing camera

100

Screen C

$360° − α$

Folding edge

Screen A

Screen B

Third support state α1 ∈ [f6, f7]

FIG. 8D

EP 4 386 606 A1

Fifth support state α ∈ [f11, f12]

FIG. 8E

Sixth support state α1 ∈ [f13, f14]

FIG. 8F

FIG. 9A

FIG. 9B

FIG. 9C

| | |
|---|---|
| ıllıll China Mobile 🛜 | ▮▯ 08:08 |

← 

Privacy Mode — 203 — OFF — 14

Camera — 204A — OFF

Microphone — ON

Positioning — ON

Bluetooth — OFF

Wi-Fi — OFF

Mobile Data Network — OFF

Associated Device — ON

FIG. 9D

100

| | |
|---|---|
| ıｌｌｌｌ China Mobile 📶 | ▣▭ 08:08 |

14

← 

Privacy Mode — OFF

Camera     204A   ON

Microphone     ON

Positioning     ON

Bluetooth     OFF

Wi-Fi     OFF

Mobile Data Network     OFF

Associated Device     ON

FIG. 9E

S101: An electronic device 100 receives a first operation of a user when detecting that the electronic device 100 is in a first preset posture

S102: Disable M preset privacy information obtaining modules in response to the detected first preset posture and the first operation, where M is a positive integer

S103: Receive a second operation of the user

S104: Recover normal use of the M privacy information obtaining modules in response to the detected second operation

FIG. 10

Volume up button

Volume down button

Power button

100

301

Screen C

Press the volume up button and the volume down button to enable a privacy mode

Screen B

Screen A

FIG. 11A

100

302

Screen C

The privacy mode is enabled

FIG. 11B

FIG. 11C

FIG. 11D

FIG. 12A

FIG. 12B

Volume up button

Volume down button

Power button

Screen C

100

305

After the disabling duration is set, press the volume up button and the volume down button to enable disabling

Disabling duration

Not limited

304

FIG. 12C

FIG. 13A

FIG. 13B

FIG. 13C

Volume up button

Volume down button

Power button

Screen C

501

Press the volume up button and the volume down button to disable a camera

100

Screen B

Screen A

FIG. 14A

Screen B

100

502

Press the volume up button
and the volume down button
to disable a microphone

Screen A

Volume up button

Volume down button

Power button

FIG. 14B

EP 4 386 606 A1

100

503

Press the volume up button and the volume down button to disable the camera

Press the volume up button and the power button to disable the microphone

Screen C

FIG. 14C

Screen A

α

Folding edge

Screen B

601

Do you want to recover a disabled module?

OK

Cancel

602

603

100

Second support state
α ∈ [f4, f5]

FIG. 15A

Volume up button

Volume down button

Power button

Screen A

α

Screen B

Press the volume up button and the volume down button to recover the disabled module

604

100

Folding edge

Second support state
α ∈ [f4, f5]

FIG. 15B

| Application (APP) layer | Camera | Calendar | Map | WLAN | Music | Messages |
|---|---|---|---|---|---|---|
| | Gallery | Phone | Navigation | Bluetooth | Videos | ... |

Indicate an upper-layer application to disable/recover a privacy information obtaining module

Posture recognition module 713 — Posture type → Privacy management module 716

Framework (Framework) layer

Vector $\vec{z1}$, vector $\vec{z2}$, included angle α, and motion time

Input event (Input operations 1, 2, 3, 4)

Sensor management module 712 — Original button event / Original touch event → Event management module 715 ← Gesture type — Gesture recognition module 714

Direction vector $\vec{z1}$ of a screen A, direction vector $\vec{z2}$ of a screen B, included angle α between the screen A and the screen B, and motion time

Original button event
Original touch event

Data-processed image

TO FIG. 16B

TO FIG. 16B

FIG. 16A

CONT.
FROM
FIG. 16A

CONT.
FROM
FIG. 16A

| Hardware abstraction layer (HAL) | Sensor service module 710 | | Camera detection service module 711 |
|---|---|---|---|

Direction vector $\overrightarrow{z1}$ of the screen A, direction vector $\overrightarrow{z2}$ of the screen B, included angle α between the screen A and the screen B, and motion time

Original button event
Original touch event

Data-processed image

| Kernel (Kernel) layer | Sensor data processing module 708 | Camera detection data processing module 709 |
|---|---|---|

Acceleration data reporting

Gyro data reporting

Button data   Touch data

Captured image

Hardware (Hardware) layer

Acceleration sensor 701

Gyro sensor 702

Function button 705

Touch sensor 706

Camera 707

Acceleration sensor 703

Gyro sensor 704

FIG. 16B

Electronic device 100

Detection unit

Response unit

FIG. 17

## INTERNATIONAL SEARCH REPORT

| International application No. |
| --- |
| **PCT/CN2022/119976** |

| A. | CLASSIFICATION OF SUBJECT MATTER |
| --- | --- |
| | G06F 21/62(2013.01)i |

According to International Patent Classification (IPC) or to both national classification and IPC

| B. | FIELDS SEARCHED |
| --- | --- |

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 折叠屏, 第一屏, 第二屏, 姿态, 角度, 夹角, 隐私, folding screen, first screen, second screen, pose, angle, privacy

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 109815676 A (VIVO COMMUNICATION TECHNOLOGY CO., LTD.) 28 May 2019 (2019-05-28) description, paragraphs [0004]-[0018] and [0023]-[0108] | 1-19 |
| A | CN 110417996 A (ZHUHAI GREE ELECTRIC APPLIANCES INC.) 05 November 2019 (2019-11-05) entire document | 1-19 |
| A | CN 110581921 A (ZHUHAI GREE ELECTRIC APPLIANCES INC.) 17 December 2019 (2019-12-17) entire document | 1-19 |
| A | CN 109241775 A (VIVO COMMUNICATION TECHNOLOGY CO., LTD.) 18 January 2019 (2019-01-18) entire document | 1-19 |
| A | CN 111475077 A (HUAWEI TECHNOLOGIES CO., LTD.) 31 July 2020 (2020-07-31) entire document | 1-19 |
| A | WO 2021147712 A1 (HUAWEI TECHNOLOGIES CO., LTD.) 29 July 2021 (2021-07-29) entire document | 1-19 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 November 2022** | **30 November 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/119976**

| Patent document cited in search report | | | Publication date (day/month/year) | Patent family member(s) | | | Publication date (day/month/year) |
|---|---|---|---|---|---|---|---|
| CN | 109815676 | A | 28 May 2019 | WO | 2020156441 | A1 | 06 August 2020 |
| CN | 110417996 | A | 05 November 2019 | None | | | |
| CN | 110581921 | A | 17 December 2019 | None | | | |
| CN | 109241775 | A | 18 January 2019 | None | | | |
| CN | 111475077 | A | 31 July 2020 | WO | 2021155808 | A1 | 12 August 2021 |
| WO | 2021147712 | A1 | 29 July 2021 | CN | 115004676 | A | 02 September 2022 |
| | | | | EP | 4084450 | A1 | 02 November 2022 |
| | | | | CN | 111263005 | A | 09 June 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111110626